# EUROPÄISCHE PATENTSCHRIFT

(11) **EP 2 956 491 B1**
(45) Veröffentlichungstag und Bekanntmachung des Hinweises auf die Patenterteilung: **01.02.2017**
(21) Anmeldenummer: 14703852.5
(22) Anmeldetag: 11.02.2014
(51) Int. Cl.: C08F 222/10, C08F 230/02, C08K 5/00, C08K 5/529

(54) **DUROMER, HERSTELLUNGSVERFAHREN, VERWENDUNG UND ZUSAMMENSETZUNGEN**
DUROMER, PRODUCTION METHOD, USE AND COMPOSITIONS
DUROMÈRE, PROCÉDÉ DE FABRICATION, UTILISATION ET COMPOSITIONS

(30) Priorität: 14.02.2013 DE 102013101487
(43) Veröffentlichungstag der Anmeldung: 23.12.2015
(73) Patentinhaber: Chemische Fabrik Budenheim KG, 55257 Budenheim (DE)
(72) Erfinder: WERMTER, Hendrik, 65346 Eltville (DE); FUTTERER, Thomas, 55218 Ingelheim (DE); VOGT, Robert, 71034 Böblingen (DE); DÖRING, Manfred, 76744 Wörth am Rhein (DE); CIESIELSKI, Michael, 06217 Merseburg (DE)
(74) Vertreter: WSL Patentanwälte Partnerschaft mbB
(86) Internationale Anmeldenummer: PCT/EP2014/052633
(87) Internationale Veröffentlichungsnummer: WO 2014/124933

(56) Entgegenhaltungen:
- WO-A1-2008/013417
- WO-A1-2009/109347

## Beschreibung

### Gegenstand der Erfindung

Die Erfindung betrifft ein Duromer, ein Verfahren zur Herstellung des Duromers, eine Verwendung des Duromers sowie das Duromer enthaltende Flammschutzmittel und Kunststoffzusammensetzungen. Es wird ein phosphorhaltiges Polymer auf Basis von mehrfunktionellen Estern ungesättigter Carbonsäuren beschrieben, das dreidimensional vernetzt ist und das beanspruchte Duromer bildet. Das Duromer ist als Flammschutzmittel und zur Verwendung in Flammschutzmitteln für Kunststoffe geeignet.

### Hintergrund der Erfindung

Zur Bereitstellung eines Flammschutzes für Kunststoffe sind zahlreiche Substanzen bekannt, die alleine oder in Kombination mit weiteren Substanzen eingesetzt werden können, die ähnliche oder sich ergänzende Flammschutzeigenschaften bereitstellen. Vorzugsweise werden dabei halogenfreie Substanzen verwendet, um die Entstehung und Freisetzung toxischer Substanzen zu vermeiden. Zu den bekannten halogenfreien Flammschutzmitteln zählen solche, die auf Metallhydroxiden, organischen oder anorganischen Phosphaten, Phosphinaten oder Phosphonaten mit synergistisch wirkenden Substanzen oder Derivaten von 1,3,5-Triazinverbindungen und Mischungen daraus basieren.

Unter anderem sind einige monomere, niedermolekulare Flammschutzadditive bekannt, die jedoch aufgrund ihres starken Weichmacher-Effektes bei das Flammschutzmittel enthaltenden Kunststoffen zu signifikanten Verschlechterungen der Materialeigenschaften sowohl bei der Verarbeitung als auch bei der Verwendung des Kunststoffes führen. Zudem nimmt bei derartigen niedermolekularen Flammschutzadditiven aufgrund ihrer Fähigkeit zur Migration im Kunststoffmaterial nach einer gewissen Zeitdauer durch Aggregation (weniger gute Verteilung des Flammschutzadditivs) oder Leaching (Migration an die Oberfläche und gegebenenfalls Austreten aus dem Kunststoff) deren Flammschutzwirkung ab.

Polymere, hochmolekulare Flammschutzadditive weisen dagegen in der Regel nur geringfügige Weichmacher-Effekte und ein geringes Migrationsvermögen auf. Sie sind jedoch im Gegensatz zu niedermolekularen Flammschutzadditiven bei der technischen Verarbeitung schlechter mit dem zu schützenden Kunststoff mischbar, insbesondere aufgrund einer schlechteren Schmelzfähigkeit und Löslichkeit in dem Kunststoff. Aus der WO 2009/109347 A1 ist beispielsweise ein lineares polyfunktionales Polymer bekannt, das durch Michael-Addition von DOPO an eine Itaconsäure und anschließende Polykondensation mit Ethylenglycol erhalten wird. Bei der Verwendung dieses Polymers in Polyestern oder Polyamiden weisen diese bei üblichen Extrusionsbedingungen von Kunststoffen (250 bis 270 °C) eine klebrige und stark anhaftende Konsistenz auf, wodurch insbesondere im Beladungsbereich vermehrt ein Verstopfen und Verkleben (Zusetzen) von Teilen der Extrusionsapparatur zu beobachten ist. Zudem zersetzt sich dieses Polymer bereits ab Temperaturen von ungefähr 300 °C.

Aus der WO 2011/080306 ist die Verwendung derartiger Polymere von Additionsprodukten von DOPO im Zusammenhang mit weiteren flammschützenden Komponenten bekannt. Es wird angenommen, dass eine verbesserte Verarbeitbarkeit von Kunststoffen durch eine Verwendung geringerer Mengen dieses Polymers im Zusammenhang mit einer weiteren Flammschutzkomponente, die bei dieser Zusammensetzung synergistisch mit dem Polymer wirkt, zustande kommt. Daher sind Kunststoffe, die derartige synergistische Mischungen enthalten, trotz Verwendung eines schlecht verarbeitbaren Polymers ohne Verkleben und Dosieren im Extrusionsverfahren verarbeitbar.

### Aufgabe

Die Aufgabe der vorliegenden Erfindung bestand daher darin, gegenüber dem Stand der Technik eine Substanz bereitzustellen, die Flammschutzeigenschaften besitzt, sowie thermisch stabil und gut verarbeitbar ist und bei Einarbeitung in ein Kunststoffpolymer dessen Materialeigenschaften nicht oder nur wenig beeinflusst.

### Beschreibung der Erfindung

Diese Aufgabe wird durch ein Duromer gelöst, das durch ein Verfahren erhältlich ist, bei dem in einem ersten Schritt eine Verbindung oder ein Gemisch von Verbindungen mit der allgemeinen Formel I 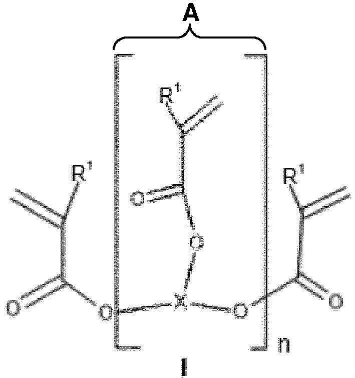 mit einer Verbindung der allgemeinen Formel II

R²-H **II**

unter Erhalt eines Gemisches von Verbindungen der allgemeinen Formel III 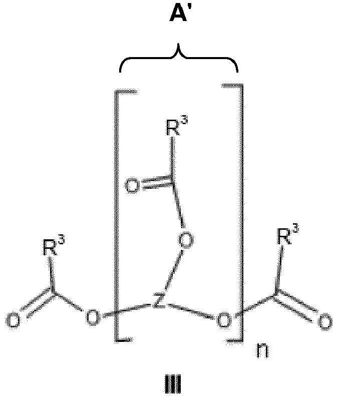 umgesetzt wird,
welches in einem zweiten Schritt in einer radikalischen Polymerisation zu einem Duromer umgesetzt wird, wobei
R¹ Wasserstoff, ein C₁-C₆-Alkyl, ein C₆-C₁₂-Aryl oder ein C₆-C₁₂-Alkylaryl ist,
R² 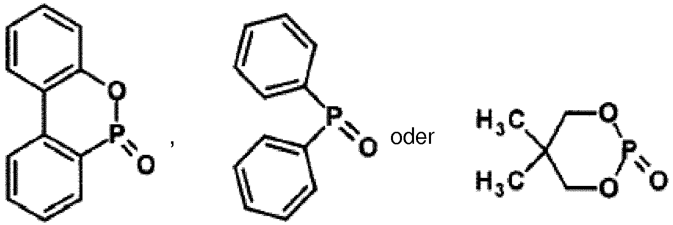 ist,
R³ 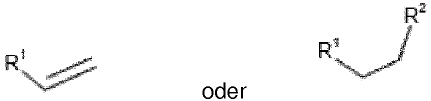 ist,
wobei innerhalb einer Verbindung der Formel III und innerhalb der Untereinheit A' die Reste R³ gleich oder verschieden sein können, und
wobei die Verbindung oder das Gemisch von Verbindungen der Formel I in einem Verhältnis zur Verbindung der Formel II eingesetzt wird, so dass das Verhältnis von 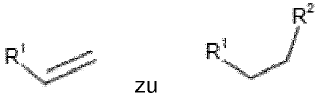 in dem im ersten Schritt erhaltenen Gemisch von Verbindungen III im Bereich von 4:1 bis 1:4 liegt, und wobei
X 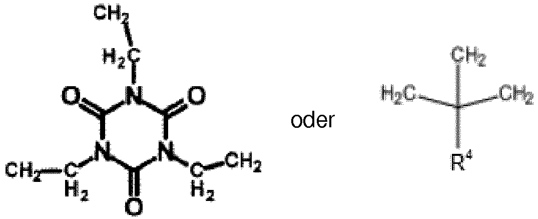 ist,
wobei R⁴ Wasserstoff, CH₂OH, OH, ein C₁-C₆-Alkyl, ein C₆-C₁₂-Aryl, ein C₆-C₁₂-Alkylaryl oder 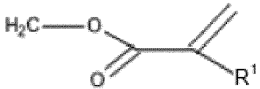 ist,
Z 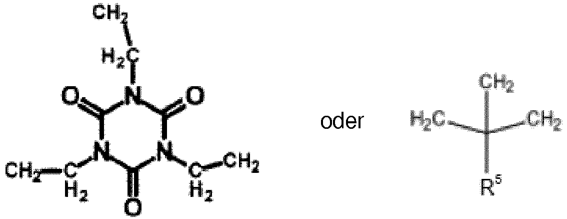 ist,
wobei R⁵ Wasserstoff, CH₂OH, OH, ein C₁-C₆-Alkyl, ein C₆-C₁₂-Aryl, ein C₆-C₁₂-Alkylaryl oder 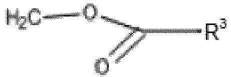 ist, und
n in der Verbindung gemäß Formel I oder den Gemischen von Verbindungen gemäß den Formeln I und III eine mittlere Kettenlänge im Bereich von 1 bis 100 repräsentiert.

Bei dem Duromer handelt es ich um ein dreidimensional vernetztes Molekül, das in Wasser unlöslich ist (unter anderem bei Normbedingungen, d.h. 0 °C und 1,01325 bar). Das Duromer ist auch in Toluol unter den oben genannten Bedingungen unlöslich sowie allgemein in organischen Lösungsmitteln, die dem Fachmann bekannt sind.

Das erhaltene Duromer weist eine Zersetzungstemperatur von wenigstens 350°C auf. Insbesondere liegt die Zersetzungstemperatur im Bereich von 350 °C bis 550 °C, vorzugsweise 380 °C bis 500 °C. Ein solches Duromer eignet sich insbesondere für die Einarbeitung in Kunststoffe bei der Extrusion, da es sich einerseits bei für die Extrusion üblichen Verarbeitungstemperaturen nicht zersetzt und nicht schmilzt und andererseits bei höheren, bei Bränden auftretenden Temperaturen, zersetzt wird und dadurch seine flammschützende Wirkung entfaltet.

Der Begriff Duromer im Sinne dieser Erfindung umfasst dabei sowohl ein Duromer als auch Gemische von Duromeren.

Das Duromer ist erhältlich durch die oben beschriebene Abfolge von Reaktionsschritten, bei denen in dem ersten Schritt eine Organophosphorverbindung gemäß Formel II in einer Phospha-Michael-Addition an mehrfunktionelle ungesättigte Ester gemäß Formel I geknüpft wird. Dabei wird ein Unterschuss an Organophosphorverbindung gemäß Formel II im Vergleich zu den in den mehrfunktionellen ungesättigten Estern enthaltenen Estergruppen bzw. randständigen C-C-Doppelbindungen (α,β-ungesättigten Bindungen) eingesetzt. Durch den Einsatz der Organophosphorverbindung im Unterschuss findet keine vollständige Umsetzung der randständigen C-C-Doppelbindungen statt, so dass die verbleibenden C-C-Doppelbindungen in der zweiten Stufe durch radikalische Polymerisation umgesetzt werden und dadurch vernetzte polymere Produkte entstehen.

Unterschuss bedeutet in diesem Zusammenhang, dass weniger Organophosphoverbindungen in der Reaktion eingesetzt werden, als randständige C-C-Doppelbindungen in dem mehrfunktionellen ungestättigten Ester bzw. dem Gemisch von Estern gemäß Formel I vorhanden sind, wobei es sich um ein molares Verhältnis handelt.

Die als Verbindung gemäß Formel II angegebenen Substanzen sind 6H-Dibenz[c,e][1,2]-oxaphosphorin-6-oxid (DOPO, CAS-Nr. 35948-25-5), Diphenylphosphinoxid (DPhPO, CAS-Nr. 4559-70-0), 5,5-Dimethyl-1,2,3-Dioxophosphorinan-2-oxid (DDPO, CAS-Nr. 4090-60-2)

Die Phospha-Michael-Addition in dem ersten Schritt sowie die radikalische Polymerisation in dem zweiten Schritt finden unter für den Fachmann für die Einzelreaktionen bekannten Reaktionsbedingungen statt. Eine Kontrolle der Vollständigkeit des Ablaufs der Phospha-Michael-Addition erfolgt vorzugsweise durch NMR, wobei vorzugsweise das Verschwinden der Edukte überwacht wird.

Das Entstehen der polymeren Produkte zeigt sich bei der Herstellung des Duromers durch Ausfällen des Produkts aus der Lösung, in welcher die Polymerisation stattfindet. Das Duromer entsteht dabei in Reinform und bedarf keiner weiteren Aufreinigung. Lediglich durch Einlagerung können insbesondere Lösungsmittel enthalten sein, die jedoch durch einen anschließenden Trocknungsschritt entfernt werden können. Ein solcher Trocknungsschritt erfolgt vorzugsweise bei Temperaturen im Bereich von ungefähr 200 °C bis 270 °C, vorzugsweise unter Vakuum im Bereich von ungefähr 4 mbar bis 8 mbar.

Es hat sich zwar gezeigt, das die ausgefallenen Partikel eine gewisse Menge an Flüssigkeit aufnehmen können, wobei die Duromerpartikel jedoch nicht gelöst werden sondern lediglich quellen.

Das Duromer kann in Form von Partikeln in Kunststoffe, insbesondere Polyamide und Polyester eingebracht werden und ändert dabei deren mechanische Eigenschaften, Kratzfestigkeit und Wärmeformstabilität nur unwesentlich. Dazu werden die in dem Verfahren erhaltenen Partikel auf eine gewünschte Größe vermahlen und/oder eine gewünschte Größe durch bekannte Verfahren, wie z.B. Sieben, aussortiert, wobei insbesondere durchschnittliche Partikeldurchmesser d50 in einem Bereich von 10 µm bis 50 µm ausgewählt werden können.

Die Angabe der mittleren Kettenlänge n für die Verbindung oder das Gemisch von Verbindungen der Formel I und das Gemisch von Verbindungen der Formel III umfasst, dass Gemische von Verbindungen I eingesetzt werden, die in Einheit A unterschiedliche Kettenlängen n aufweisen können, wobei die Angabe der mittleren Kettenlänge n auch das Zahlenmittel der verschiedenen Kettenlängen n bzw. die durchschnittliche Kettenlänge n bezeichnet. Diese Angabe umfasst auch, dass nur eine Verbindung gemäß Formel I eingesetzt werden kann, deren Kettenlänge n eine ganze Zahl 1, 2, 3, 4 oder mehr in einem Bereich von 1 bis 100 beträgt. Die mittlere Kettenlänge n bleibt im Verlauf des Verfahrens unverändert, so dass die mittlere Kettenlänge in dem Gemisch von Verbindungen der Formel III der mittleren Kettenlänge der Verbindung der Formel I bzw. der des Gemisches von Verbindungen der Formel I entspricht.

In einer Ausführungsform wird in dem ersten Schritt ein Gemisch von Verbindungen der allgemeinen Formel I eingesetzt, die identische R¹ und/oder identische X aufweisen.

Aufgrund des Unterschusses an Verbindungen der Formel II in dem ersten Schritt werden unterschiedliche Gruppen R³ erhalten. Für den Fall, dass R³ 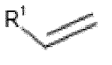 ist, ist keine Reaktion erfolgt.

Bei erfolgter Phospha-Michael-Addition an die Gruppe 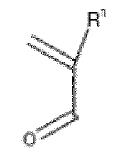 in einer Verbindung der Formel I ist R³

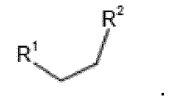

Es versteht sich, dass für das Ablaufen der Reaktion an einzelnen Gruppen E in einer Verbindung der Formel I keine Aussage gemacht werden kann. Sowohl innerhalb einer Verbindung der Formel III als auch innerhalb der Untereinheit A' einer Verbindung der Formel III können alle, keine oder ein Teil der Gruppen E im ersten Schritt reagieren, so dass innerhalb einer Verbindung der Formel III und innerhalb der Untereinheit A' die R³ gleich oder teilweise voneinander verschieden sind. Das Verhältnis der im ersten Schritt erhaltenen Gruppen 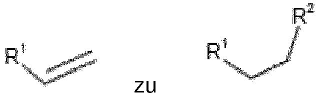 in dem Gemisch von Verbindungen der Formel III liegt insgesamt jedoch im Bereich von 4:1 bis 1:4.

In einer bevorzugten Ausführungsform beträgt das molare Verhältnis von der Verbindung der allgemeinen Formel II zu der Verbindung oder dem Gemisch von Verbindungen der allgemeinen Formel I vor der Umsetzung in dem ersten Schritt im Bereich von 1 zu 5/E bis 1 zu 1,25/E, wobei E die Anzahl der Gruppen 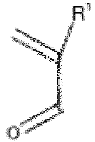 in der Verbindung oder dem Gemisch von Verbindungen der Formel I angibt. Sofern ein Gemisch eingesetzt wird, handelt es sich bei E um die durchschnittliche Anzahl der Gruppen.

Durch die Festlegung des Verhältnisses der Reaktionspartner wird sichergestellt, dass bei vollständigem Ablauf der Michael-Addition durchschnittlich im Bereich von 10% bis 80% der C-C-Doppelbindungen erhalten bleiben, die dann in dem zweiten Schritt für eine radikalische Polymerisation bereitstehen, wodurch ein gut vernetztes Duromer erhalten wird.

In einer bevorzugten Ausführungsform liegt n im Bereich von 1 bis 50.

In einer Ausführungsform repräsentiert n eine Kettenlänge im Bereich von 1 bis 25, insbesondere 1 bis 15, vorzugsweise 1 bis 10.

In einer bevorzugten Ausführungsform ist Verbindung I ausgewählt unter Pentaerythritol-Tetraacrylat, Dipentaerythritol-Pentaacrylat, Dipentaerythritol-Hexaacrylat, Trimethylolpropan-Trisacrylat und Tris(2-acryloxyethyl)isocyanurat (Pentaerythritol-Tetraacrylat (PETA, CAS-Nr 4986-89-4), Dipentaerythritol-Pentaacrylat (DPPA, CAS-Nr. 60506-81-2), Dipentaerythritol-Hexaacrylat (CAS-Nr. 29570-58-9), Trimethylolpropan-Trisacrylat (TMPTA, CAS-Nr. 15625-89-5), Tris(2-acryloxyethyl)isocyanurat (THEICTA, CAS-Nr. 40220-08-4)). Es hat sich gezeigt, dass diese sich für die Bereitstellung eines gut vernetzen Duromers besonders gut eignen.

In einer bevorzugten Ausführungsform erfolgt die Umsetzung in dem ersten Schritt unter Katalyse mit einem Katalysator, der ausgewählt ist unter tertiären Aminen und tertiären Aminobasen. Der Katalysator ist vorzugsweise Triethylamin. Es hat sich gezeigt, dass ein derartiger Katalysator für das vollständige Ablaufen der Michael-Addition in dem ersten Schritt vorteilhaft ist und gleichzeitig bei der anschließenden radikalischen Polymerisation keine störenden Auswirkungen hat.

In einer bevorzugten Ausführungsform erfolgt die Umsetzung in dem zweiten Schritt in einer Emulsion in Toluol oder Wasser. In dem zweiten Reaktionsschritt entsteht das erfindungsgemäße Duromer unmittelbar in Reinform und fällt aus diesen Lösungsmitteln auf. Es ist daher lediglich ein Trocknen, jedoch kein weiteres Aufreinigen des Duromers mehr erforderlich.

Vorzugsweise findet die radikalische Polymerisation in dem zweiten Schritt in einer Schutzgasatmosphäre statt, bevorzugt einer Stickstoffatmosphäre.

In einer bevorzugten Ausführungsform erfolgt die Umsetzung in dem zweiten Schritt mit Hilfe eines Radikalstarters, der vorzugsweise ausgewählt ist unter Azo-bis-(isobutyronitril) (AIBN), Dibenzoylperoxid. Vorzugsweise erfolgt die Reaktion unter Einsatz von Azo-bis-(isobutyronitril).

Erfindungsgemäß ist auch ein Verfahren zur Herstellung des erfindungsgemäßen Duromers, bei dem in einem ersten Schritt eine Verbindung oder ein Gemisch von Verbindungen mit der allgemeinen Formel I 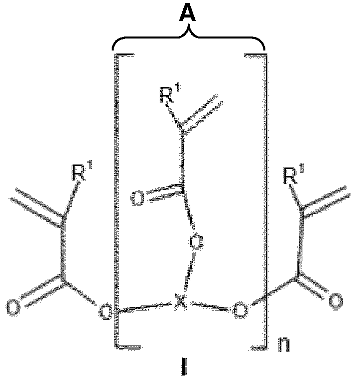 mit einer Verbindung der allgemeinen Formel II

R²-H II

unter Erhalt eines Gemisches von Verbindungen der allgemeinen Formel III 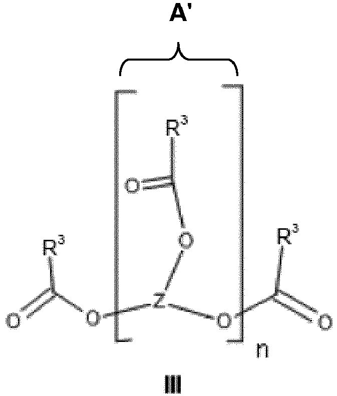 umgesetzt wird,
welches in einem zweiten Schritt in einer radikalischen Polymerisation zu einem Duromer umgesetzt wird, wobei
R¹ Wasserstoff, ein C₁-C₆-Alkyl, ein C₆-C₁₂-Aryl oder ein C₆-C₁₂-Alkylaryl ist,
R² 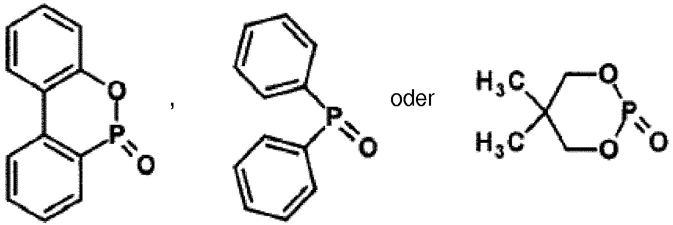 ist,
R³ 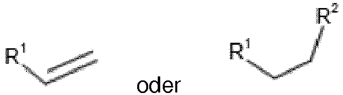 ist,
wobei innerhalb einer Verbindung der Formel III und innerhalb der Untereinheit A' die Reste R³ gleich oder verschieden sein können, und
wobei die Verbindung oder das Gemisch von Verbindungen der Formel I in einem Verhältnis zur Verbindung der Formel II eingesetzt wird, so dass das Verhältnis von 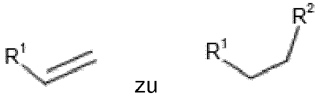 in dem im ersten Schritt erhaltenen Gemisch von Verbindungen der Formel III im Bereich von 4:1 bis 1:4 liegt, und wobei
X 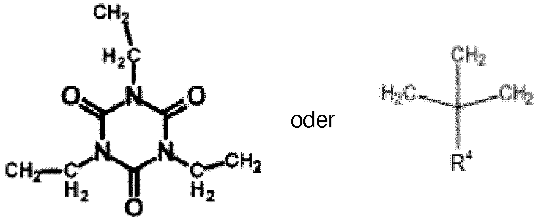 ist,
wobei R⁴ Wasserstoff, CH₂OH, OH, ein C₁-C₆-Alkyl, ein C₆-C₁₂-Aryl, ein C₆-C₁₂-Alkylaryl oder 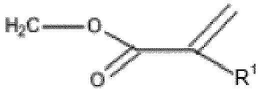 ist,
Z 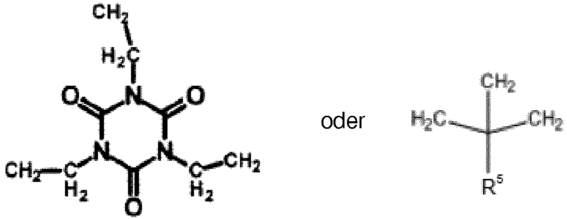 ist,
wobei R⁵ Wasserstoff, CH₂OH, OH, ein C₁-C₆-Alkyl, ein C₆-C₁₂-Aryl, ein C₆-C₁₂-Alkylaryl oder 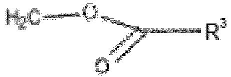 ist, und
n in der Verbindung gemäß Formel I oder den Gemischen von Verbindungen gemäß den Formel I und III eine mittlere Kettenlänge im Bereich von 1 bis 100 repräsentiert.

Durch die oben beschriebene Abfolge von Reaktionsschritten, bei denen in dem ersten Schritt eine Organophosphorverbindung gemäß Formel II in einer Phospha-Michael-Addition an mehrfunktionelle ungesättigte Ester gemäß Formel I geknüpft wird, wird ein Duromer bzw. ein Gemisch von Duromeren erhalten. Dabei wird ein Unterschuss an Organophosphorverbindung gemäß Formel II im Vergleich zu den in den mehrfunktionellen ungesättigten Estern enthaltenen Estergruppen bzw. randständigen C-C-Doppelbindungen (α,β-ungesättigten Bindungen) eingesetzt. Durch den Einsatz der Organophosphorverbindung im Unterschuss findet keine vollständige Umsetzung der randständigen C-C-Doppelbindungen statt, so dass die verbleibenden C-C-Doppelbindungen in der zweiten Stufe durch radikalische Polymerisation umgesetzt werden und dadurch vernetzte polymere Produkte entstehen.

Unterschuss bedeutet in diesem Zusammenhang, dass weniger Organophosphoverbindungen in der Reaktion eingesetzt werden, als randständige C-C-Doppelbindungen in dem mehrfunktionellen ungestättigten Ester bzw. dem Gemisch von Estern gemäß Formel I vorhanden sind, wobei es sich um ein molares Verhältnis handelt.

Die als Verbindung gemäß Formel II angegebenen Substanzen sind 6H-Dibenz[c,e][1,2]-oxaphosphorin-6-oxid (DOPO, CAS-Nr. 35948-25-5), Diphenylphosphinoxid (DPhPO, CAS-Nr. 4559-70-0), 5,5-Dimethyl-1,2,3-Dioxophosphorinan-2-oxid (DDPO, CAS-Nr. 4090-60-2)

Die Phospha-Michael-Addition in dem ersten Schritt sowie die radikalische Polymerisation in dem zweiten Schritt finden unter für den Fachmann für die Einzelreaktionen bekannten Reaktionsbedingungen statt. Eine Kontrolle der Vollständigkeit des Ablaufs der Phospha-Michael-Addition erfolgt vorzugsweise durch NMR, wobei vorzugsweise das Verschwinden der Edukte überwacht wird.

Das Entstehen der polymeren Produkte zeigt sich bei der Herstellung des Duromers durch Ausfällen des Produkts aus der Lösung, in welcher die Polymerisation stattfindet. Das Duromer entsteht dabei in Reinform und bedarf keiner weiteren Aufreinigung. Lediglich durch Einlagerung können insbesondere Lösungsmittel enthalten sein, die jedoch durch einen anschließenden Trocknungsschritt entfernt werden können. Ein solcher Trocknungsschritt erfolgt vorzugsweise bei Temperaturen im Bereich von ungefähr 200 °C bis 270 °C, vorzugsweise unter Vakuum im Bereich von ungefähr 4 mbar bis 8 mbar.

Die in dem Verfahren erhaltenen Partikel können in einem weiteren Schritt auf eine gewünschte Größe vermahlen und/oder eine gewünschte Größe durch bekannte Verfahren, wie z.B. Sieben, aussortiert, wobei insbesondere durchschnittliche Partikeldurchmesser d50 in einem Bereich von 10 µm bis 50 µm ausgewählt werden können.

Die Angabe der mittleren Kettenlänge n für die Verbindung oder das Gemisch von Verbindungen der Formel I und das Gemisch von Verbindungen der Formel III umfasst, dass Gemische von Verbindungen I eingesetzt werden, die in Einheit A unterschiedliche Kettenlängen n aufweisen können, wobei die Angabe der mittleren Kettenlänge n auch das Zahlenmittel der verschiedenen Kettenlängen n bzw. die durchschnittliche Kettenlänge n bezeichnet. Diese Angabe umfasst auch, dass nur eine Verbindung gemäß Formel I eingesetzt werden kann, deren Kettenlänge n eine ganze Zahl 1, 2, 3, 4 oder mehr in einem Bereich von 1 bis 100 beträgt. Die mittlere Kettenlänge n bleibt im Verlauf des Verfahrens unverändert, so dass die mittlere Kettenlänge in dem Gemisch von Verbindungen der Formel III der mittleren Kettenlänge der Verbindung der Formel I bzw. der des Gemisches von Verbindungen der Formel I entspricht.

In einer Ausführungsform wird in dem ersten Schritt ein Gemisch von Verbindungen der allgemeinen Formel I eingesetzt, die identische R¹ und/oder identische X aufweisen.

In einer bevorzugten Ausführungsform beträgt in dem Verfahren das molare Verhältnis von der Verbindung der allgemeinen Formel II zu der Verbindung oder dem Gemisch von Verbindungen der allgemeinen Formel I vor der Umsetzung in dem ersten Schritt im Bereich von 1 zu 5/E bis 1 zu 1,25/E, wobei E die Anzahl der Gruppen 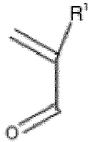 in der Verbindung oder dem Gemisch von Verbindungen der Formel I angibt.

In einer bevorzugten Ausführungsform liegt n im Bereich von 1 bis 50.

In einer Ausführungsform repräsentiert n eine Kettenlänge im Bereich von 1 bis 25, insbesondere 1 bis 15, vorzugsweise 1 bis 10.

In einer bevorzugten Ausführungsform wird in dem Verfahren eine Verbindung I eingesetzt, die ausgewählt ist unter Pentaerythritol-Tetraacrylat, Dipentaerythritol-Pentaacrylat, Dipentaerythritol-Hexaacrylat, Trimethylolpropan-Trisacrylat und Tris(2-acryloxyethyl)isocyanurat.

In einer bevorzugten Ausführungsform erfolgt in dem Verfahren die Umsetzung in dem ersten Schritt unter Katalyse mit einem Katalysator, der ausgewählt ist unter tertiären Aminen und tertiären Aminobasen, vorzugsweise Triethylamin.

In einer bevorzugten Ausführungsform erfolgt die Umsetzung in dem zweiten Schritt des Verfahrens in einer Emulsion in Toluol oder Wasser.

Vorzugsweise findet die radikalische Polymerisation in dem zweiten Schritt in einer Schutzgasatmosphäre statt, bevorzugt einer Stickstoffatmosphäre.

In einer bevorzugten Ausführungsform erfolgt die Umsetzung in dem zweiten Schritt mit Hilfe eines Radikalstarters, der vorzugsweise ausgewählt ist unter Azo-bis-(isobutyronitril), Dibenzoylperoxid.

Erfindungsgemäß ist weiterhin eine Flammschutzmittelzusammensetzung, die ein Duromer gemäß einem der Ansprüche 1 bis 7 enthält. Es hat sich gezeigt, dass das Duromer als oder in einem Flammschutzmittel insbesondere für Kunststoffzusammensetzungen mit Vorteil eingesetzt werden kann.

Das Duromer entfaltet seine flammschützende Wirkung in der Gasphase. Es kann in Kombination mit anderen Flammschutzmitteln, z.B. mit solchen, die durch ihre Zersetzung Sauerstoff in die Umgebung des so geschützten Kunststoffmaterials abgeben und/oder die durch ihre Zersetzung bei hohen Temperaturen zu einer Schichtbildung auf der Oberfläche des mit dem Flammschutzmittel versehenen Kunststoffmaterials führen, eingesetzt werden. Dadurch wird ggf. ein Weiterbrennen des Kunststoffmaterials verhindert. Zudem ist es auch möglich, das Duromer mit Flammschutzmitteln, die nach einem anderen Wirkungsmechanismus funktionieren, zu verwenden.

In einer bevorzugten Ausführungsform enthält die Flammschutzmittelzusammensetzung wenigstens eine weitere flammschützende Komponente, die vorzugsweise ausgewählt ist unter Stickstoffbasen, Melaminderivaten, Phosphaten, Pyrophosphaten, Polyphosphaten, organischen und anorganischen Phosphinaten, organischen und anorganischen Phosphonaten und Derivaten der vorgenannten Verbindungen, vorzugsweise ausgewählt unter Ammoniumpolyphosphat, mit Melamin, Melaminharz, Melaminderivaten, Silanen, Siloxanen oder Polystyrolen beschichteten und/oder beschichteten und vernetzten Ammoniumpolyphosphatpartikeln, sowie 1,3,5-Triazinverbindungen, einschließlich Melamin, Melam, Melem, Melon, Ammelin, Ammelid, 2-Ureidomelamin, Acetoguanamin, Benzoguanamin, Diaminphenyltriazin, Melaminsalze- und addukte, Melamincyanurat, Melaminborat, Melaminorthophosphat, Melmaminpyrophosphat, Dimelaminpyrophosphat und Melaminpolyphosphat, oligomere und polymere 1,3,5-Triazinverbindungen und Polyphosphate von 1,3,5-Triazinverbindungen, Guanin, Piperazinphosphat, Piperazinpolyphosphat, Ethylendiaminphosphat, Pentaerythritol, Borphosphat, 1,3,5-Trihydroxyethylisocyanurat, 1,3,5-Triglycidylisocyanurat, Triallylisocyanurat und Derivaten der vorgenannten Verbindungen.

Es hat sich gezeigt, dass das Duromer nicht nur allein flammschützende Eigenschaften aufweist, sondern auch in Kombination mit anderen flammschützenden Substanzen in einer Flammschutzmittelzusammensetzung hervorragende Flammschutzeigenschaften aufweist.

Vorzugsweise enthält die Flammschutzmittelzusammensetzung neben dem erfindungsgemäßen Duromer als weitere Flammschutzkomponente Melaminpolyphosphat.

In einer bevorzugten Ausführungsform beträgt das Verhältnis von Duromer zu der wenigstens einen weiteren Flammschutzkomponente in der Flammschutzmittelzusammensetzung von 1:99 bis 99:1, vorzugsweise 1:99 bis 1:1 und besonders bevorzugt 1:99 bis 1:9.

Diese Verhältnisse treffen auch für die Verwendung von Melaminpolyphosphat als weitere Flammschutzkomponente zu.

Erfindungsgemäß ist weiter die Verwendung des Duromers als Flammschutzmittel oder in einer Flammschutzmittelzusammensetzung bei der Herstellung von Kunststoffzusammensetzungen.

Es hat sich gezeigt, dass erfindungsgemäße Duromere insbesondere bei der Herstellung von Kunststoffzusammensetzungen im Extrusionsverfahren hervorragende Eigenschaften aufweisen und ohne die Verarbeitungseigenschaften der Kunststoffe zu beeinflussen, in diesen Verfahren in unterschiedlichen Kunststoffen verarbeitet werden können. Bei Verwendung des Duromers in Kunststoffen wird die Glasübergangstemperatur der Kunststoffe nur geringfügig geändert.

Kunststoffe, in denen das Duromer als Flammschutzmittel oder in einer Flammschutzmittelzusammensetzung verwendet werden kann sind ausgewählt unter gefüllten und ungefüllten Polyolefinen, Vinyl-Polymeren, Olefin-Copolymeren, thermoplastischen Elastomeren auf Olefinbasis, vernetzten thermoplastischen Elastomeren auf Olefinbasis, Polyurethanen, gefüllten und ungefüllten Polyestern und Copolyestern, Styrol-Blockcopolymeren, gefüllten und ungefüllten Polyamiden und Copolyamiden. Beispiele für Copolyester sind PET und PBT.

Prinzipiell sind das Duromer und das Duromer enthaltende Flammschutzmittelzusammensetzungen für alle beliebigen Kunststoffe verwendbar. Sie sind als Flammschutz für ungefüllte und gefüllte bzw. verstärkte Polyamide, Polyester, wie Polybutylenterephthalat und Polyethylenterephthalat, Polyolefine, wie Polyethylen und Polypropylen, Polystyrol, Styrol-Blockcopolymere, wie ABS, SBS, SEES, SEPS, SEEPS und MBS, Polyurethane, Polyacrylate, Polycarbonate, Polysulfone, Polyetherketon, Polyphenylenoxid, Polyphenylensulfid, Epoxidharze u.a. einsetzbar.

In einer bevorzugten Ausführungsform sind die Kunststoffzusammensetzungen ausgewählt unter gefüllten und ungefüllten Polyamiden, Polyestern und Polyolefinen. Unter einer gefüllten Kunststoffzusammensetzung versteht man dabei eine Kunststoffzusammensetzung, die einen oder mehrere Füllstoffe enthält, insbesondere solche, die ausgewählt sind aus der Gruppe, bestehend aus Metallhydroxiden, insbesondere Erdalkalimetallhydroxiden, Alkalimetallhydroxiden und Aluminiumhydroxiden, Silikaten, insbesondere Schichtsilikaten, Bentonit, Erdalkalimetallsilikaten und Alkalimetallsilikaten, Carbonaten, insbesondere Kalziumcarbonat, sowie Talg, Ton, Glimmer, Kieselerde, Kalziumsulfat, Bariumsulfat, Aluminiumhydroxid, Magnesiumhydroxid, Glasfasern, Glaspartikeln und Glaskugeln, Holzmehl, Zellulosepulver, Russ, Graphit, Böhmit und Farbstoffen.

Alle aufgeführten Füllstoffe können sowohl in für Füllstoffe üblicher Form und Größe, die dem Fachmann bekannt ist, als auch in nanoskaliger Form, d.h. als Partikel mit einem durchschnittlichen Durchmesser im Bereich von ungefähr 1 bis ungefähr 100 nm, vorliegen und in den Kunststoffzusammensetzungen verwendet werden.

Zur Verstärkung der Kunststoffzusammensetzung und Erhöhung deren mechanischer Stabilität werden vorzugsweise Glasfasern als Füllstoff zugegeben.

In einer bevorzugten Ausführungsform ist das Duromer in einer Menge von 1 bis 30 Gew.-%, bevorzugt zwischen 1 und 15 Gew.-%, bezogen auf das Gesamtgewicht von Kunststoffzusammensetzung mit Duromer eingebracht.

Diese Mengenverhältnisse bewirken eine gute Flammschutzwirkung des Duromers und verhindern gleichzeitig ein Verändern der Eigenschaften des Kunststoffs sowohl bei der Verarbeitung als auch die des fertiggestellten Materials, insbesondere im Hinblick auf mechanische Eigenschaften, Kratzfestigkeit und Wärmeformstabilität.

In einer bevorzugten Ausführungsform wird das Duromer in einer Flammschutzmittelzusammensetzung mit weiteren Flammschutzkomponenten in die Kunststoffzusammensetzung eingebracht, wobei vorzugsweise die Flammschutzmittelzusammensetzung in einer Menge von 5 bis 60 Gew.-%, bevorzugt von 10 bis 50 Gew.-%, bezogen auf das Gesamtgewicht der Kunststoffzusammensetzung mit Flammschutzmittelzusammensetzung, in der Kunststoffzusammensetzung enthalten ist.

Bei diesen Mengenverhältnissen wird einerseits eine gute Flammschutzwirkung der Flammschutzmittelzusammensetzung gewährleistet und andererseits werden die Verarbeitungs- und Materialeigenschaften des Duromers nur wenig beeinflusst.

Erfindungsgemäß ist auch eine Kunststoffzusammensetzung, die das erfindungsgemäße Duromer enthält.

Es hat sich gezeigt, dass insbesondere gefüllte und ungefüllte Polyamide, Polyester und Polyolefine, die ein erfindungsgemäßes Duromer enthalten, ohne eine Veränderung der mechanischen Eigenschaften und Verarbeitungseigenschaften in unterschiedlichen Verfahren für verschiedene Anwendungen verarbeitet werden können. Insbesondere beeinflusst das Duromer nicht das Verhalten von gefüllten und ungefüllten Polyamide, Polyester und Polyolefine bei der Extrusion.

Kunststoffe, in denen das Duromer als Flammschutzmittel oder in einer Flammschutzmittelzusammensetzung verwendet werden kann sind ausgewählt unter gefüllten und ungefüllten Polyolefinen, Vinyl-Polymeren, Olefin-Copolymeren, thermoplastischen Elastomeren auf Olefinbasis, vernetzten thermoplastischen Elastomeren auf Olefinbasis, Polyurethanen, gefüllten und ungefüllten Polyestern und Copolyestern, Styrol-Blockcopolymeren, gefüllten und ungefüllten Polyamiden und Copolyamiden. Beispiele für Copolyester sind PET und PBT.

Prinzipiell ist das Duromer für beliebige Kunststoffe verwendbar, u.a. in ungefüllten und gefüllten bzw. verstärkten Polyamiden, Polyestern, wie Polybutylenterephthalat und Polyethylenterephthalat, Polyolefinen, wie Polyethylen und Polypropylen, Polystyrol, Styrol-Blockcopolymeren, wie ABS, SBS, SEES, SEPS, SEEPS und MBS, Polyurethanen, Polyacrylaten, Polycarbonaten, Polysulfonen, Polyetherketonen, Polyphenylenoxid, Polyphenylensulfid, Epoxidharzen..

Das Duromer entfaltet seine flammschützende Wirkung in der Gasphase. Es kann in Kombination mit anderen Flammschutzmitteln, z.B. mit solchen, die durch ihre Zersetzung Sauerstoff in die Umgebung des so geschützten Kunststoffmaterials abgeben und/oder die durch ihre Zersetzung bei hohen Temperaturen zu einer Schichtbildung auf der Oberfläche des mit dem Flammschutzmittel versehenen Kunststoffmaterials führen, eingesetzt werden. Dadurch wird ggf. ein Weiterbrennen des Kunststoffmaterials verhindert. Zudem ist es auch möglich, das Duromer mit Flammschutzmitteln, die nach einem anderen Wirkungsmechanismus funktionieren, zu verwenden.

Zu den Flammschutzmitteln, die zusammen mit dem Duromer in einer Kunststoffzusammensetzung enthalten sein können, zählen flammschützende Komponenten, die vorzugsweise ausgewählt sind unter Stickstoffbasen, Melaminderivaten, Phosphaten, Pyrophosphaten, Polyphosphaten, organischen und anorganischen Phosphinaten, organischen und anorganischen Phosphonaten und Derivaten der vorgenannten Verbindungen, vorzugsweise ausgewählt unter Ammoniumpolyphosphat, mit Melamin, Melaminharz, Melaminderivaten, Silanen, Siloxanen oder Polystyrolen beschichteten und/oder beschichteten und vernetzten Ammoniumpolyphosphatpartikeln, sowie 1,3,5-Triazinverbindungen, einschließlich Melamin, Melam, Melem, Melon, Ammelin, Ammelid, 2-Ureidomelamin, Acetoguanamin, Benzoguanamin, Diaminphenyltriazin, Melaminsalze- und addukte, Melamincyanurat, Melaminborat, Melaminorthophosphat, Melmaminpyrophosphat, Dimelaminpyrophosphat und Melaminpolyphosphat, oligomere und polymere 1,3,5-Triazinverbindungen und Polyphosphate von 1,3,5-Triazinverbindungen, Guanin, Piperazinphosphat, Piperazinpolyphosphat, Ethylendiaminphosphat, Pentaerythritol, Borphosphat, 1,3,5-Trihydroxyethylisocyanurat, 1,3,5-Triglycidylisocyanurat, Triallylisocyanurat und Derivaten der vorgenannten Verbindungen.

Neben dem Duromer und ggf. weiteren flammschützenden Komponenten können in einer Ausführungsform auch Füllstoffe in der Kunststoffzusammensetzung enthalten sein, insbesondere solche, die ausgewählt sind aus der Gruppe, bestehend aus Metallhydroxiden, insbesondere Erdalkalimetallhydroxiden, Alkalimetallhydroxiden und Aluminiumhydroxiden, Silikaten, insbesondere Schichtsilikaten, Bentonit, Erdalkalimetallsilikaten und Alkalimetallsilikaten, Carbonaten, insbesondere Kalziumcarbonat, sowie Talg, Ton, Glimmer, Kieselerde, Kalziumsulfat, Bariumsulfat, Aluminiumhydroxid, Magnesiumhydroxid, Glasfasern, Glaspartikeln und Glaskugeln, Holzmehl, Zellulosepulver, Russ, Graphit, Böhmit und Farbstoffen.

Alle aufgeführten Füllstoffe können sowohl in für Füllstoffe üblicher Form und Größe, die dem Fachmann bekannt ist, als auch in nanoskaliger Form, d.h. als Partikel mit einem durchschnittlichen Durchmesser im Bereich von ungefähr 1 bis ungefähr 100 nm, vorliegen und in den Kunststoffzusammensetzungen verwendet werden.

Zur Verstärkung der Kunststoffzusammensetzung und Erhöhung deren mechanischer Stabilität werden vorzugsweise Glasfasern als Füllstoff zugegeben.

### Beispiele

### Beispiel 1: Duromer aus Pentaerythritol-Tetraacrylat (PETA) und 6H-Dibenz[c,e][1,2]-oxaphosphorin-6-oxid (DOPO)

### Methode A: Emulsionspolymerisation in Toluol

17,62 g (0,05 mol) Pentaerythritol-Tetraacrylat und 21,62 g (0,1 mol) DOPO wurden in 150 ml Toluol vorgelegt, mit 10,12 g (0,1 mol, 13,9 ml) Triethylamin versetzt und 4 Stunden ohne Schutzgas auf 80 °C erhitzt, bis zum vollständigen Umsatz der Michael-Addition (eine Kontrolle des Verschwindens der Edukte erfolgte durch ³¹P und ¹H-NMR-Analyse). Die Mischung wurde unter Schutzgas (Zuleiten von 100 % N₂), Rückfluss und innigstem Rühren 30 Stunden auf 125 °C erhitzt. Das Produkt wurde abgesaugt, nach Lufttrocknen fein vermahlen und 6 Stunden bei 225 °C im Vakuum (6 mbar) vollständig getrocknet. Es wurde ein weißer Feststoff mit einer Ausbeute von 31,65 g (81 %) und den folgenden Eigenschaften erhalten:
Glasübergangstemperatur (DSC): 98,0 °C.
Elementaranalyse: berechnet n*C₄₁H₃₈O₁₂P₂: C 62,76%, H 4,88%, P 7,89%; gefunden: C 62,21%, H 5,37%, P 7,75%

### Methode B: Polymerisation in Toluol in Gegenwart eines Radikalstarters

105,7g (0,3 mol) Pentaerythritol-Tetracrylat und 129,7 g (0,6 mol) DOPO wurden in 700 ml Toluol vorgelegt, mit 60,7 g (0,6 mol) Triethylamin versetzt und 5 Stunden ohne Schutzgas auf 80 °C erhitzt, bis zum vollständigen Umsatz der Michael-Addition (eine Kontrolle des Verschwindens der Edukte erfolgte durch ³¹P und ¹H-NMR-Analyse). Dann wurde die überstehende Phase durch Dekantieren abgetrennt. Die flüchtigen Bestandteile wurden am Rotationsverdampfer abgetrennt, und der ölige Rückstand wurde mit der unteren Phase vereinigt. Anschließend wurden 600 ml Toluol hinzugegeben. Dann wurde unter Stickstoffatmosphäre (Zuleiten von 100% N₂) erhitzt. Nach Erreichen des Siedepunktes wurde eine Lösung von 0,1 g Azo-bis-(isobutyronitril) (AIBN) in 10 ml Toluol unter kräftigem Rühren im Verlauf von 15 min zugetropft. Nach kurzer Zeit entstand eine Suspension von Partikeln eines Duromers. Diese Suspension wurde 2 Stunden unter Rückfluss gerührt. Das noch warme Produkt wurde abgesaugt, mit Toluol (150 ml) gewaschen, über Nacht im Abzug getrocknet und schließlich im Vakuumtrockenschrank auf 210°C erhitzt (3 Stunden, ca. 6 mbar). Erhalten wurden 223,6 g Produkt als weißes Pulver (Ausbeute 95%).

### Methode C: Emulsionspolymerisation in Wasser

129,80 g (0,60 mol) DOPO und 105,70 g (0.30 mol) Pentaerythritol-Tetraacrylat (PETA) wurden in 500 ml Toluol aufgenommen, mit 61,14 g (0,6 mol, 83,8 ml) Triethylamin versetzt und 6 Stunden ohne Schutzgas auf 80 °C erhitzt, bis zum vollständigen Umsatz der Michael-Addition (eine Kontrolle des Verschwindens der Edukte erfolgte durch ³¹P und ¹H-Analyse). Nach Erkalten wurde die flüssige Phase abdekantiert, der Rückstand in 500 ml destilliertem Wasser aufgenommen, mit 10.0 g Natriumdodecylsulfat versetzt und über Nacht unter kräftigem Rühren auf 85 °C erhitzt. Die Mischung wurde heiß abgesaugt, das Rohprodukt bei 140 °C im Vakuum vorgetrocknet, nach Erkalten fein vermahlen und 6 h bei 250 °C im Vakuum (6 mbar) vollständig getrocknet. Es wurde ein beigefarbener Feststoff mit einer Ausbeute von 184,24 g (78,23%) erhalten.

### Methode D: Polymerisation in Substanz

Zur Polymerisation in Substanz wurde eine Probe des abdekantierten Zwischenproduktes in einer offenen Aluminiumschale mit ca. 3 mm Schichthöhe im Trockenschrank 6 h bei 150 °C ausgehärtet. Das so erhaltene Produkt wurde zu einem gelblichen Pulver vermahlen.

### Beispiel 2: Duromer aus Pentaerythritol-Tetraacrylat und Diphenylphosphinoxid (DPhPO)

### Emulsionspolymerisation in Toluol

17,6 g (0,05 mol) Pentaerythritol-Tetraacrylat und 20,2 g (0,1 mol) DPhPO wurden in 150 ml Toluol vorgelegt, mit 10,1 g (0,1 mol, 13,9 ml) Triethylamin versetzt und 4 Stundenohne Schutzgas auf 80 °C erhitzt, bis zum vollständigen Umsatz der Michael-Addition (eine Kontrolle erfolgte durch NMR-Analyse). Die Mischung wurde unter Schutzgas (Zuleiten von 100% N₂), Rückfluss und innigstem Rühren 30 Stunden auf 125 °C erhitzt. Das Produkt wurde abgesaugt, nach Lufttrocknen fein vermahlen und 6 Stunden bei 210 °C im Vakuum (6 mbar) vollständig getrocknet. Es wurde ein weißer Feststoff mit einer Ausbeute von 85% erhalten.

### Beispiel 3: Duromer aus Tris(2-acryloxyethyl)isocyanurat (THEICTA) und 6H-Dibenz[c,e][1,2]-oxaphosphorin-6-oxid (DOPO)

### Emulsionspolymerisation in Toluol

42,3 g (0,1 mol) THEICTA und 21,62 g (0,1 mol) DOPO wurden in 150 ml Toluol vorgelegt, mit 10,1 g (0,1 mol, 13,9 ml) Triethylamin versetzt und 4 Stundenohne Schutzgas auf 80 °C erhitzt, bis zum vollständigen Umsatz der Michael-Addition (eine Kontrolle des Verschwindens der Edukte erfolgte durch ³¹P und ¹H-Analyse). Die Mischung wurde unter Schutzgas, Rückfluss und kräftigem Rühren 30 Stunden auf 125 °C erhitzt. Das Produkt wurde abgesaugt, nach Lufttrocknen fein vermahlen und 6 Stunden bei 200 °C im Vakuum (6 mbar) vollständig getrocknet. Es wurde ein weißer Feststoff mit einer Ausbeute von 87% erhalten.

### Beispiel 4: Duromer aus Pentaerythritol-Tetraacrylat und Dimethyl-1,2,3-Dioxophosphorinan-2-oxid (DDPO)

### Emulsionspolymerisation in Toluol

17,6 g (0,05 mol) Pentaerythritol-Tetraacrylat und 15,0 g (0,1 mol) DDPO wurden in 150 ml Toluol vorgelegt, mit 10,1 g (0,1 mol, 13,9 ml) Triethylamin versetzt und 4 Stunden ohne Schutzgas auf 80 °C erhitzt, bis zum vollständigen Umsatz der Michael-Addition (eine Kontrolle des Verschwindens der Edukte erfolgte durch ³¹P und ¹H-NMR). Die Mischung wurde unter Schutzgas (Zuleiten von 100% N₂), Rückfluss und innigstem Rühren 30 Stunden auf 125 °C erhitzt. Das Produkt wurde abgesaugt, nach Lufttrocknen fein vermahlen und 6 Stunden bei 170 °C im Vakuum (6 mbar) vollständig getrocknet.
Es wurde ein weißer Feststoff mit einer Ausbeute von 75% erhalten.

### Beispiel 5: Duromer aus Trimethylolpropan-Trisacrylat (TMPTA) und DOPO

### Emulsionspolymerisation in Toluol

29,6 g (0,1 mol) TMPTA und 21,62 g (0,1 mol) DOPO wurden in 150 ml Toluol vorgelegt, mit 10,1 g (0,1 mol, 13,9 ml) Triethylamin versetzt und 4 Stunden ohne Schutzgas auf 80 °C erhitzt, bis zum vollständigen Umsatz der Michael-Addition (eine Kontrolle des Verschwindens der Edukte erfolgte durch ³¹P und ¹H-Analyse). Die Mischung wurde unter Schutzgas (Zuleiten von 100% N₂), Rückfluss und kräftigem Rühren 30 Stunden auf 125 °C erhitzt. Das Produkt wurde abgesaugt, nach Lufttrocknen fein vermahlen und 6 Stunden bei 200 °C im Vakuum (6 mbar) vollständig getrocknet.
Es wurde ein weißer Feststoff mit einer Ausbeute von 88 % erhalten.

### Beispiel 6: Duromer aus Dipentaerythritol-Hexaacrylat und DOPO

### Polymerisation in Toluol in Gegenwart eines Radikalstarters

98,1g (0,18 mol) Dipentaerythritol-Hexaacrylat (CAS-Nr.: 29570-58-9) und 136,2 g (0,63 mol) DOPO wurden in 500 ml Toluol vorgelegt, mit 63,7 g (0,63 mol) Triethylamin versetzt und 6 Stunden ohne Schutzgas bis zum vollständigen Umsatz der Michael-Addition auf 80 bis 82 °C erhitzt (eine Kontrolle des Verschwindens der Edukte erfolgte durch ³¹P und ¹H-Analyse). Dann wurde die überstehende Phase durch Dekantieren abgetrennt. Die flüchtigen Bestandteile wurden am Rotationsverdampfer abgetrennt, und der ölige Rückstand wurde mit der unteren Phase vereinigt. Anschließend wurden 500 ml Toluol hinzugegeben. Dann wurde unter Stickstoffatmosphäre (100% N₂) erhitzt. Nach Erreichen des Siedepunktes wurde eine Lösung von 0,15 g Azo-bis-(isobutyronitril) (AIBN) in 50 ml Toluol unter kräftigem Rühren im Verlauf von 15 min zugetropft. Die erhaltene Suspension von Duromer-Partikeln wurde 2 h unter Rückfluss gerührt. Das noch warme Produkt wurde abgesaugt, mit Toluol (150 ml) gewaschen, über Nacht im Abzug getrocknet und im Vakuumtrockenschrank auf 210 °C erhitzt (3 Stunden, ca. 6 mbar). Dann wurde das Produkt mit einer Analysenmühle gemahlen und anschließend gesiebt (Maschenweite des Siebs: 0,5 mm). Erhalten wurden 226,6 g des Duromers als weißes Pulver (Ausbeute: 96,4%).

### Beispiel 7: DSC und TGA Untersuchungen des Flammschutzmittels in Kunststoffzusammensetzungen

Zur Überprüfung der Verarbeitungseigenschaften von Kunststoffzusammensetzungen, die das erfindungsgemäße Duromer enthalten, wurden unterschiedliche Kunststoffzusammensetzungen mit dem erfindungsgemäßen Duromer und bekannten Flammschutzmitteln hergestellt und DSC-(dynamische Differenzkalorimetrie) und TGA- (Thermogravimetrie) Messungen unterzogen.

### Herstellung der Probenmaterialien:

Für diese Untersuchung wurde ein mit Glasfaser gefülltes homopolymeres Polyamid PA6.6 (Poly-(N,N'-hexamethylenadipindiamid); BKV 30H1.0 von Lanxess) verwendet, das zunächst unter Verwendung eines gleichläufigen Doppelwellenextruders mit einem Schneckendurchmesser von 18 mm (L/D = 40) der Firma Coperion extrudiert wurde. Das Polyamid und das Flammschutzmittel wurden gravimetrisch dosiert. Die Ausstoßleisung des Extruders betrug 3-5 kg/h, die Verarbeitungstemperatur betrug 280 °C. Nach Beendigung des Extrusionsvorganges wurde das fertige Polymermaterial unter Verwendung eines Wasserbades und Stranggranulators (Pell-Tec) granuliert.

### Probenzusammensetzungen

Für die Versuche wurde ein PA6.6 Polyamid (Poly-(N,N'-hexamethylenadipindiamid)), d.h. ein Homopolymer aus Hexamethylendiamin und Adipinsäure mit 30 % Glasfasern mit
[1.2] Poly-[DOPAc-2-PETA]: Duromer, aus Pentaerythritol-Tetraacrylat und DOPO, das in einem der Versuche in Beispiel 1 erhalten wurde,
[2.2] Melaminpolyphosphat (Budit 3141 von Chemische Fabrik Budenheim) bzw.
[3.2] keinem weiteren Zusatz
extrudiert.

Der Anteil der jeweiligen Zusätze betrug 22,5 % Melaminpolyphosphat [ 2.2] beziehungsweise 1 % Duromer [1.2], gemessen an der Gesamtprobe. In die Probe [3.2] wurde kein Zusatz zugegeben.

### Durchführung der DSC-Messung

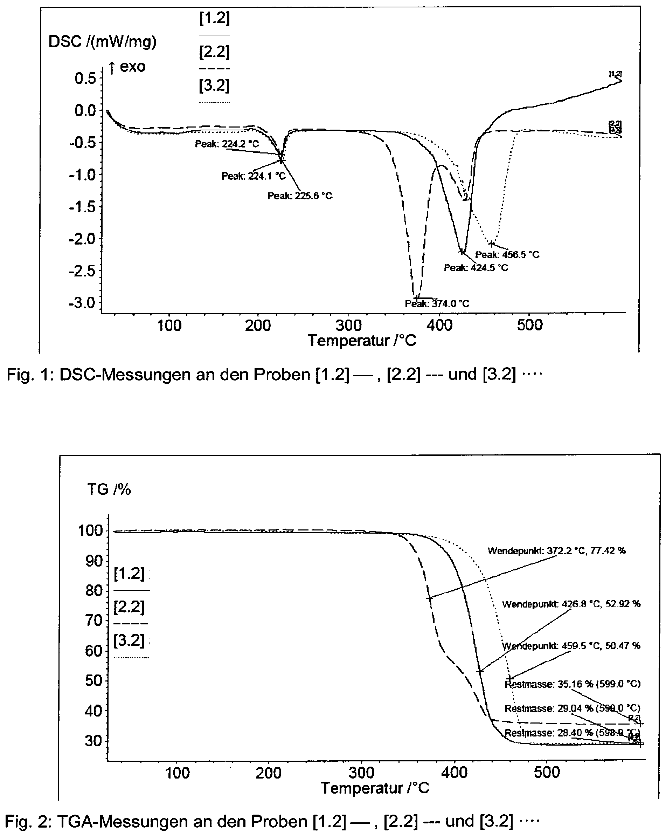

Die Schmelztemperaturen wurden mittels DSC-Messungen bestimmt. Die zu untersuchenden Proben wurden von einer Anfangstemperatur von 30 °C ausgehend mit einer Heizrate von 10 K/min bis 600 °C aufgeheizt. Die Ergebnisse der Messungen sind in Figur 1 dargestellt. Die Schmelztemperaturen wurden graphisch aus den Messdaten bestimmt. Die erste Änderung in der Enthalpiekurve gibt den Schmelzpunkt des Polyamids mit oder ohne Zusatz an.

**Tabelle 1: Aus Figur 1 ermittelte Schmelztemperaturen**

| | | | |
|---|---|---|---|
| Probe | 1.2 | 2.2 | 3.2 |
| Schmelzteperatur in °C | 224,1 | 225,6 | 224,2 |

Die Schmelztemperatur von dem Polyamid mit einem Glasfasergehalt von 30 % wird durch die Zugabe von dem Duromer Poly-[DOPAc-2-PETA] nicht verändert, es können also dieselben Prozessparameter beim Herstellungsprozess wie bei dem Polyamid ohne Flammschutzmittel verwendet werden.

### Durchführung der TGA-Messungen

Die Bestimmung der Zersetzungstemperatur wurde mit Hilfe von TGA-Messungen unter Inertgas (Stickstoff) durchgeführt. Die Massenänderung in Abhängigkeit von der Temperatur wurde bei einer Aufheizrate von 10 K/min gemessen. Die Ergebnisse der Messungen sind in Figur 2 dargestellt. Die Zersetzungstemperaturen wurden am Wendepunkt der Messkurve grafisch bestimmt.

Anhand der Wendepunkte der TGA-Kurven ist erkennbar, dass die thermische Stabilität von der Probe mit dem Duromer Poly-[DOPAc-2-PETA] höher ist als bei der Probe des Polymers mit Melaminpolyphosphat. Für die Verarbeitung bedeutet dies, dass man in einem viel größeren Temperaturfenster arbeiten kann und dass sich das Flammschutzmittel erst bei höheren Temperaturen im Extruder zersetzt.

### Beispiel 8: Ermittlung von Flammschutzeigenschaften des Duromers

Für die Versuche wurden Prüfkörper aus Polymermaterialen mit unterschiedlichen Flammschutzzusätzen hergestellt. Es sind sowohl erfindungsgemäße als auch nicht erfindungsgemäße Verwendungen von Flammschutzmitteln und entsprechende Polymermaterialien aufgeführt.

### Herstellung

Die Extrusion der Polymere wurde auf einem gleichläufigen Doppelschneckenextruder mit einem Schneckendurchmesser von 18 mm (L/D = 40) der Firma Coperion durchgeführt. Die Dosierung des Polymers und die Zudosierung des Flammschutzmittels erfolgte gravimetrisch. Der Extruder wurde mit einer Ausstoßleistung von 3-5 kg/h gefahren. Die austretende Polymerschmelze wurde vor dem Granulieren mit dem Stranggranulator (Pell-Tec) in einem Wasserbad abgekühlt. Das entstandene Granulat wurde mittels Minispritzgussmaschine der Firma Babyplast zu UL-94 Prüfkörpern mit einer Dicke von 1,6 mm verarbeitet.

### Zusammensetzungen / Kombination

Zur Überprüfung der Flammschutzeigenschaften und zur Klassifizierung der erfindungsgemäßen Flammschutzmittelzusammensetzungen in unterschiedlichen Polymeren wurde an normgerechten Prüfkörpern der UL94 Test durchgeführt. Die Flammschutzmittel bzw. Zusammensetzungen und die verwendeten Polymere sind im Nachfolgenden aufgeführt.

### Polymer

Zur Herstellung der flammgeschützten Kunststoffzusammensetzungen wurde ein mit 15 % Glasfasern gefülltes PA6.6 (ALTECH A2015/109 von ALBIS) verwendet. Das Basispolymer war weder vor der Verarbeitung in dem Versuch noch vom Hersteller mit einem Flammschutzmittel ausgerüstet.

Die in Tabelle 1 aufgeführten Angaben sind Gewichtsanteile der jeweiligen Komponente in der Zusammensetzung. Folgende flammschützende Komponenten wurden verwendet: ein erfindungsgemäßes Duromer Poly-[DOPAc-2-PETA] (s.o., nachfolgend auch Poly-DOPAc) und Budit 3141 (Melaminpolyphosphat der Chemischen Fabrik Budenheim), Ukanol FR 80 (Polyester mit 9,10-Dihydro-9-oxa-10-phospha-phenanthren-10-oxid-Seitenketten von Schill + Seilacher).

### UL94 Test

Insgesamt 5 Probekörper, jeder der Kunststoffzusammensetzung wurde in einer vertikalen Position eingespannt und an das freie Ende eine Bunsenbrennerflamme gehalten. Die exakte Durchführung der Versuche und Beflammung mit einer 2 cm hohen Bunsenbrennerflamme wurde nach den Vorgaben der Underwirter Laboratories, Standard UL94 durchgeführt.

Als Ergebnis sind die Einstufungen in die Brandschutzklassen V-0 bis V-2 angegeben. Dabei bedeutet V-0, dass die Gesamtbrenndauer von 5 getesteten Prüfkörpern weniger als 50 Sekunden betrug und die Baumwolle nicht durch herabtropfende glühende oder brennende Bestandteile des Prüfkörpers entzündet wurde. Die Einstufung V-1 bedeutet, dass die Gesamtbrenndauer mehr als 50 Sekunden aber weniger als 250 Sekunden betrug und ebenfalls die Baumwolle nicht entzündet wurde. V-2 bedeutet, dass die Gesamtbrenndauer von 5 Prüfkörpern zwar weniger als 250 Sekunden betrug, die Baumwolle jedoch durch herabtropfende Prüfkörperbestandteile in mindestens einem der 5 Tests entzündet wurde. Die Abkürzung NC steht für "nicht klassifizierbar" und bedeutet, dass eine Gesamtbrenndauer von mehr als 250 Sekunden gemessen wurde. In vielen dieser Fälle verbrennt der Prüfkörper vollständig.

Die nachfolgende Tabelle gibt sowohl die Zusammensetzungen als auch die Ergebnisse des oben beschriebenen Flammschutztests an:

| Veruchs-Nr. | Polymer | Flammschutz | | | UL941,6 mm |
|---|---|---|---|---|---|
| | PA6.615% GF | Poly-DOPAc | Budit 3141 | Ukanol FR80 | |
| Ref. 1 | 100 | | | | N.C. |
| Ref. 2 | 77,5 | | 22,5 | | V-2 |
| Ref. 3 | 75 | | 25 | | V-1 |
| Ref. 4 | 77,5 | | | 22,5 | V-2 |
| Ref. 5 | 80 | | | 20 | V-2 |
| Ref. 6 | 77,5 | | 7,5 | 15 | V-2 |
| Ref. 7 | 77,5 | | 12,5 | 10 | V-2 |
| Ref. 8 | 77,5 | | 15 | 7,5 | V-2 |
| Ex. 1 | 77,5 | 0,5 | 22 | | V-0 |
| Ex. 2 | 77,5 | 3 | 19,5 | | V-0 |
| Ex. 3 | 77,5 | 1 | 21,5 | | V-0 |

Die Ergebnisse des UL94 Tests zeigen, dass eine Kombination aus Budit 3141 (MPP) und Poly-[DOPAc-2-PETA] eine deutlich bessere Flammschutzwirkung in der Zusammensetzung mit Polyamid PA 6.6 15 % GF hat als die in den Vergleichsversuchen (Ref.) verwendeten Flammschutzmittel. Wird nur MPP als Flammschutz für Polyamid verwendet, kann im besten Fall ein Klassifizierung mit V-1 erfolgen. Eine Gesamtbeladung von 22,5 % erwies sich als bestmögliche Variante. Verwendet man eine Kombination aus Poly-[DOPAc-2-PETA] und MPP, kann wie oben gezeigt, eine V-0 Klassifizierung erzielt werden. Selbst eine sehr kleine Zugabe von nur 1 % Poly-[DOPAc-2-PETA] in der Zusammensetzung zeigt diese deutliche Verbesserung. Dieses Ergebnis wird bei sonst gleicher Gesamtbeladung mit Flammschutzmittel erreicht. Dies zeigt, dass Poly-[DOPAc-2-PETA] einen synergistischen Effekt in dieser Kombination aufweisen kann und somit die Klassifizierung im UL-94 verbessern kann.

Erhöht man die Konzentration der Poly-[DOPAc-2-PETA] Komponente in einer Flammschutzmittelzusammensetzung mit einer Gesamtbeladung von 22,5 % in der Kunststoffzusammensetzung, so verkürzen sich die Brandzeiten mit Erhöhung des Poly-[DOPAc-2-PETA] Anteils. Die Intumeszenz ist bei dieser Flammschutzmittelkombination viel stärker ausgeprägt als bei der Verwendung von MPP als alleinigem Flammschutzmittel.

Bei Vergleichsversuchen mit reinem Ukanol als Flammschutzmittel verklebte der Einzug beim Extrudieren. Wohingegen bei der Verarbeitung mit erfindungsgemäßen Duromeren als Flammschutzmittel keine zusätzlichen Vorkehrungen getroffen oder weiteren Sicherheitskriterien/- aspekte erfüllt werden müssen. Die Extrusion kann mit denselben Einstellungen und Temperaturen erfolgen wie bei dem entsprechenden nicht flammgeschützten Polyamid.

## Patentansprüche

1. Duromer, erhältlich durch ein Verfahren, bei dem in einem ersten Schritt eine Verbindung oder ein Gemisch von Verbindungen mit der allgemeinen Formel I 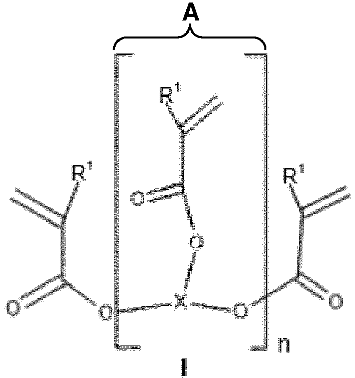 mit einer Verbindung der allgemeinen Formel II
R²-H **II**
unter Erhalt eines Gemisches von Verbindungen der allgemeinen Formel III 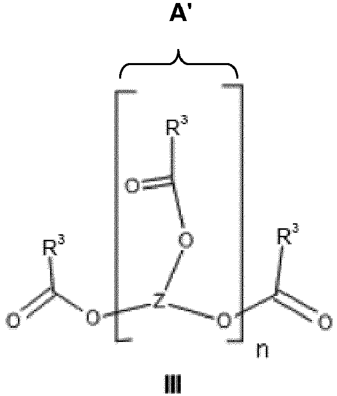 umgesetzt wird,
welches in einem zweiten Schritt in einer radikalischen Polymerisation zu einem Duromer umgesetzt wird, wobei
R¹ Wasserstoff, ein C₁-C₆-Alkyl, ein C₆-C₁₂-Aryl oder ein C₆-C₁₂-Alkylaryl ist,
R² 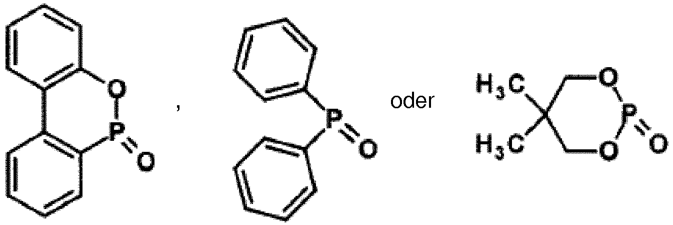 ist,
R³ 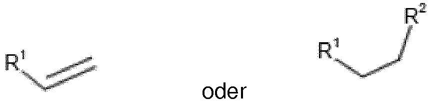 ist,
wobei innerhalb einer Verbindung der Formel III und innerhalb der Untereinheit A' die Reste R³ gleich oder verschieden sein können und wobei die Verbindung oder das Gemisch von Verbindungen der Formel I in einem Verhältnis zur Verbindung der Formel II eingesetzt wird, so dass das Verhältnis von 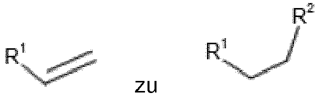 in dem im ersten Schritt erhaltenen Gemisch von Verbindungen III im Bereich von 4:1 bis 1:4 liegt, und wobei
X 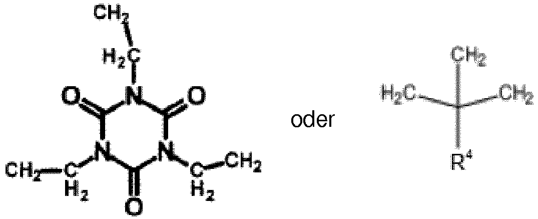 ist,
wobei R⁴ Wasserstoff, CH₂OH, OH, ein C₁-C₆-Alkyl, ein C₆-C₁₂-Aryl, ein C₆-C₁₂-Alkylaryl oder 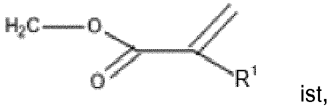 Z 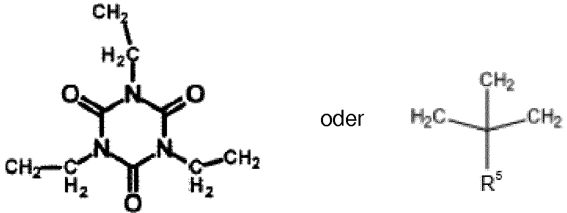 ist,
wobei R⁵ Wasserstoff, CH₂OH, OH, ein C₁-C₆-Alkyl, ein C₆-C₁₂-Aryl, ein C₆-C₁₂-Alkylaryl oder 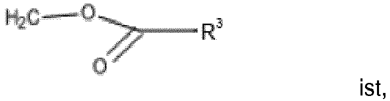 und
n in der Verbindung gemäß Formel I oder den Gemischen von Verbindungen gemäß den Formeln I und III eine mittlere Kettenlänge im Bereich von 1 bis 100 repräsentiert.

2. Duromer gemäß Anspruch 1, **dadurch gekennzeichnet, dass** das molare Verhältnis von der Verbindung der allgemeinen Formel II zu der Verbindung oder dem Gemisch von Verbindungen der allgemeinen Formel I vor der Umsetzung in dem ersten Schritt im Bereich von 1 zu 5/E bis 1 zu 1,25/E beträgt, wobei E die Anzahl der Gruppen 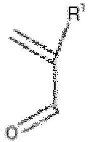 in der Verbindung oder dem Gemisch von Verbindungen gemäß Formel I angibt.

3. Duromer gemäß einem der vorangehenden Ansprüche, **dadurch gekennzeichnet, dass** n im Bereich von 1 bis 50 liegt.

4. Duromer gemäß einem der vorangehenden Ansprüche, **dadurch gekennzeichnet, dass** Verbindung I ausgewählt ist unter Pentaerythritol-Tetraacrylat, Dipentaerythritol-Pentaacrylat, Dipentaerythritol-Hexaacrylat, Trimethylolpropan-Trisacrylat und Tris(2-acryloxyethyl)isocyanurat.

5. Duromer gemäß einem der vorangehenden Ansprüche, **dadurch gekennzeichnet, dass** die Umsetzung in dem ersten Schritt unter Katalyse mit einem Katalysator erfolgt, der ausgewählt ist unter tertiären Aminen und tertiären Aminobasen, vorzugsweise Triethylamin.

6. Duromer gemäß einem der vorangehenden Ansprüche, **dadurch gekennzeichnet, dass** die Umsetzung in dem zweiten Schritt in einer Emulsion in Toluol oder Wasser erfolgt.

7. Duromer gemäß einem der vorangehenden Ansprüche, **dadurch gekennzeichnet, dass** die Umsetzung in dem zweiten Schritt mit Hilfe eines Radikalstarters erfolgt, der vorzugsweise ausgewählt ist unter Azo-bis-(isobutyronitril), Dibenzoylperoxid.

8. Verfahren, bei dem in einem ersten Schritt eine Verbindung oder ein Gemisch von Verbindungen mit der allgemeinen Formel I 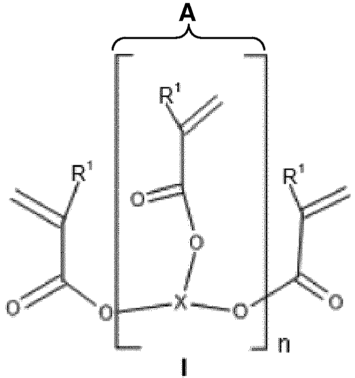 mit einer Verbindung der allgemeinen Formel II
R²-H **II**
unter Erhalt eines Gemisches von Verbindungen der allgemeinen Formel III 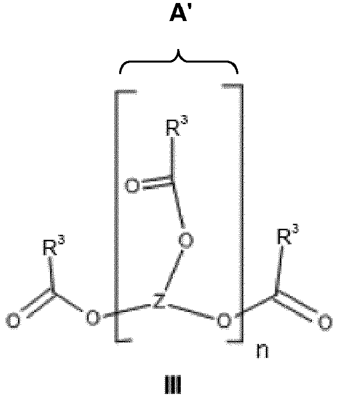 umgesetzt wird,
welches in einem zweiten Schritt in einer radikalischen Polymerisation zu einem Duromer umgesetzt wird, wobei
R¹ Wasserstoff, ein C₁-C₆-Alkyl, ein C₆-C₁₂-Aryl oder ein C₆-C₁₂-Alkylaryl ist,
R² 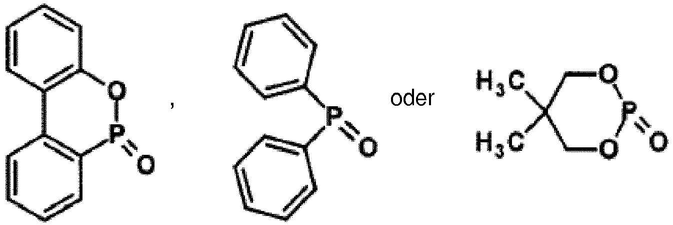 ist,
R³ 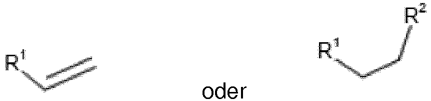 ist,
wobei innerhalb einer Verbindung der Formel III und innerhalb der Untereinheit A' die Reste R³ gleich oder verschieden sein können, und wobei die Verbindung oder das Gemisch von Verbindungen der Formel I in einem Verhältnis zur Verbindung der Formel II eingesetzt wird, so dass das Verhältnis von 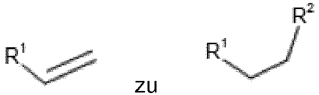 in dem im ersten Schritt erhaltenen Gemisch von Verbindungen III im Bereich von 4:1 zu 1:4 liegt, und wobei
X 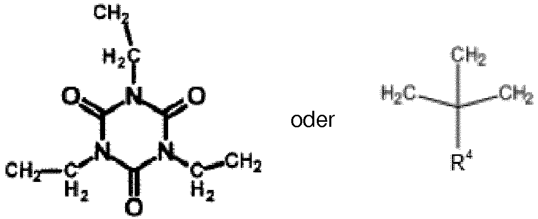 ist,
wobei R⁴ Wasserstoff, CH₂OH, OH, ein C₁-C₆-Alkyl, ein C₆-C₁₂-Aryl, ein C₆-C₁₂-Alkylaryl oder 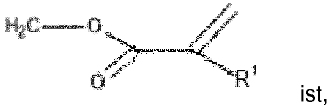 Z 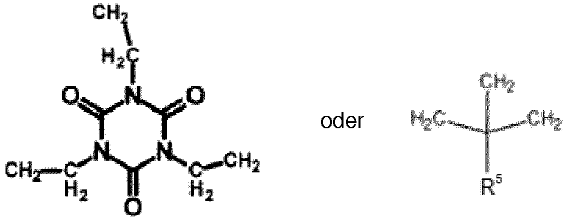 ist,
wobei R⁵ Wasserstoff, CH₂OH, OH, ein C₁-C₆-Alkyl, ein C₆-C₁₂-Aryl, ein C₆-C₁₂-Alkylaryl oder 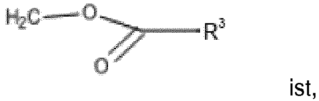 und
n in der Verbindung gemäß Formel I oder den Gemischen von Verbindungen gemäß den Formeln I und III eine mittlere Kettenlänge im Bereich von 1 bis 100 repräsentiert.

9. Flammschutzmittelzusammensetzung, die ein Duromer gemäß einem der Ansprüche 1 bis 7 enthält.

10. Flammschutzmittelzusammensetzung gemäß Anspruch 9, die wenigstens eine weitere flammschützende Komponente enthält, ausgewählt unter Stickstoffbasen, Melaminderivaten, Phosphaten, Pyrophosphaten, Polyphosphaten, organischen und anorganischen Phosphinaten, organischen und anorganischen Phosphonaten und Derivaten der vorgenannten Verbindungen, vorzugsweise ausgewählt unter Ammoniumpolyphosphat, mit Melamin, Melaminharz, Melaminderivaten, Silanen, Siloxanen oder Polystyrolen beschichteten und/oder beschichteten und vernetzten Ammoniumpolyphosphatpartikeln, sowie 1,3,5-Triazinverbindungen, einschließlich Melamin, Melam, Melem, Melon, Ammelin, Ammelid, 2-Ureidomelamin, Acetoguanamin, Benzoguanamin, Diaminphenyltriazin, Melaminsalze- und addukte, Melamincyanurat, Melaminborat, Melaminorthophosphat, Melmaminpyrophosphat, Dimelaminpyrophosphat und Melaminpolyphosphat, oligomere und polymere 1,3,5-Triazinverbindungen und Polyphosphate von 1,3,5-Triazinverbindungen, Guanin, Piperazinphosphat, Piperazinpolyphosphat, Ethylendiminphosphat, Pentaerythritol, Borphosphat, 1,3,5-Trihydroxyethylisocyanurat, 1,3,5-Triglycidylisocyanurat, Triallylisocyanurat und Derivaten der vorgenannten Verbindungen.

11. Flammschutzmittelzusammensetzung gemäß Anspruch 10, **dadurch gekennzeichnet, dass** das Verhältnis von Duromer zu der wenigstens einen weiteren Flammschutzkomponente in dem Flammschutzmittelzusammensetzung von 1:99 bis 99:1, vorzugsweise 1:99 bis 1:1 und besonders bevorzugt 1:99 bis 1:9 beträgt.

12. Verwendung eines Duromers gemäß einem der Ansprüche 1 bis 7, als Flammschutzmittel oder in einer Flammschutzmittelzusammensetzung gemäß einem der Ansprüche 9 bis 11 bei der Herstellung von Kunststoffzusammensetzungen.

13. Verwendung gemäß Anspruch 12, **dadurch gekennzeichnet, dass** die Kunststoffzusammensetzungen ausgewählt sind unter gefüllten und ungefüllten Polyamiden, Polyestern und Polyolefinen.

14. Verwendung gemäß einem der Ansprüche 12 oder 13, **dadurch gekennzeichnet, dass** das Duromer in einer Menge von 1 bis 30 Gew.-%, bevorzugt zwischen 1 und 15 Gew.-% bezogen auf das Gesamtgewicht der Kunststoffzusammensetzung mit Duromer eingebracht wird.

15. Verwendung gemäß einem der Ansprüche 12 bis 14, **dadurch gekennzeichnet, dass** in die Kunststoffzusammensetzung eine Flammschutzmittelzusammensetzung gemäß einem der Ansprüche 9 bis 11 eingebracht wird, wobei vorzugsweise die Flammschutzmittelzusammensetzung in einer Menge von 5 bis 60 Gew.-%, besonders bevorzugt von 10 bis 50 Gew.-%, bezogen auf das Gesamtgewicht der Kunststoffzusammensetzung mit Flammschutzmittelzusammensetzung in der Kunststoffzusammensetzung enthalten ist.

16. Kunststoffzusammensetzung, welche das Duromer gemäß einem der Ansprüche 1 bis 7 enthält.

## Claims

1. A thermoset which can be obtained by a method in which in a first step a compound or a mixture of compounds having the general formula I 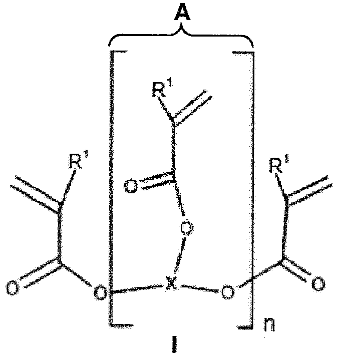 is reacted with a compound of the general formula II
R²-H II
giving a mixture of compounds of the general formula III 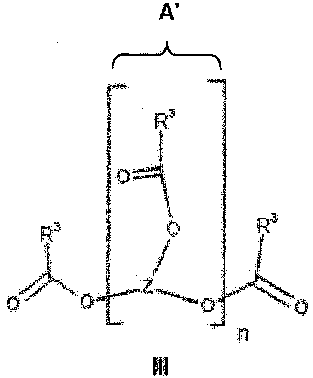 which in a second step is reacted in a radical polymerization operation to give a thermoset, wherein the designations are:
R¹ hydrogen, a C₁-C₆ alkyl, a C₆-C₁₂ aryl or a C₆-C₁₂ alkylaryl,
R² 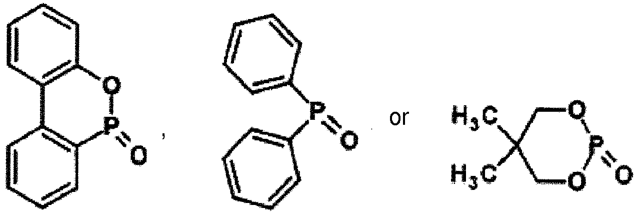
R³ 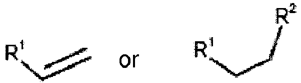
wherein within a compound of formula III and within the sub-unit A' the residues R³ can be the same or different and wherein the compound or the mixture of compounds of formula I is used in a ratio to the compound of formula II so that the ratio of 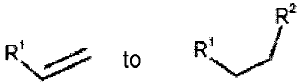 in the mixture produced in the first step of compounds III is in the range of between 4:1 and 1:4, and wherein
X 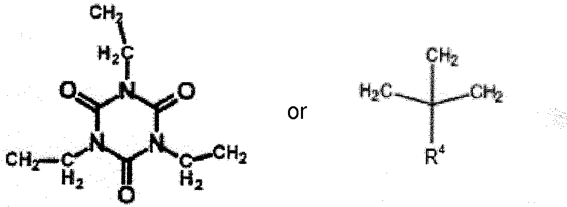 wherein R⁴ is hydrogen, CH₂OH, OH, a C₁-C₆ alkyl, a C₆-C₁₂ aryl, a C₆-C₁₂ alkylaryl or 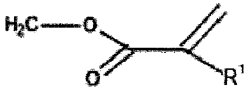 Z 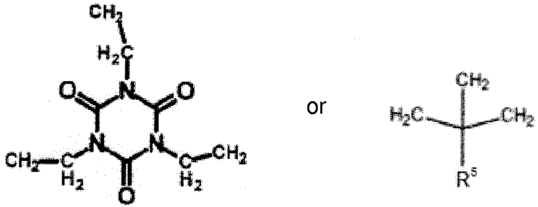 wherein R⁵ is hydrogen, CH₂OH, OH, a C₁-C₆ alkyl, a C₆-C₁₂ aryl, a C₆-C₁₂ alkylaryl or 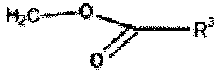 and
n in the compound according to formula I or the mixtures of compounds according to formulae I and III represents a mean chain length in the range of between 1 and 100.

2. A thermoset as set forth in claim 1 **characterised in that** the molar ratio of the compound of the general formula II to the compound or the mixture of compounds of the general formula I prior to the reaction in the first step is in the range of 1 to 5/E to 1 to 1.25/E, wherein E is the number of groups 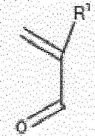 in the compound or the mixture of compounds according to formula I.

3. A thermoset as set forth in one of the preceding claims **characterised in that** n is in the range of between 1 and 50.

4. A thermoset as set forth in one of the preceding claims **characterised in that** compound I is selected from pentaerythritol tetra-acrylate, dipentaerythritol penta-acrylate, dipentaerythritol hexa-acrylate, trimethylolpropane tris-acrylate and tris(2-acryloxyethyl)isocyanurate.

5. A thermoset as set forth in one of the preceding claims **characterised in that** the reaction in the first step is effected under catalysis with a catalyst selected from tertiary amines and tertiary amino-bases, preferably triethylamine.

6. A thermoset as set forth in one of the preceding claims **characterised in that** the reaction in the second step is effected in an emulsion in toluene or water.

7. A thermoset as set forth in one of the preceding claims **characterised in that** the reaction in the second step is effected by means of a radical starter preferably selected from azobis-(isobutyronitrile) and dibenzoyl peroxide.

8. A method in which in a first step a compound or a mixture of compounds having the general formula I 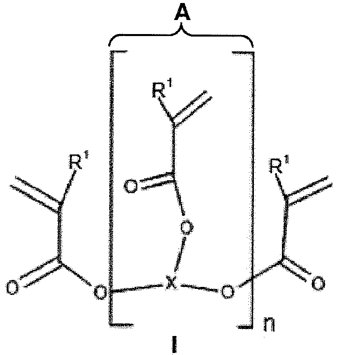 is reacted with a compound of the general formula II
R²-H II
giving a mixture of compounds of the general formula III 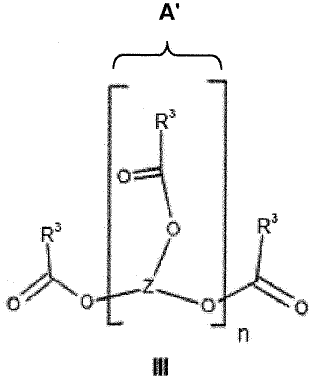 which in a second step is reacted in a radical polymerization operation to give a thermoset, wherein the designations are:
R¹ hydrogen, a C₁-C₆ alkyl, a C₆-C₁₂ aryl or a C₆-C₁₂ alkylaryl,
R² 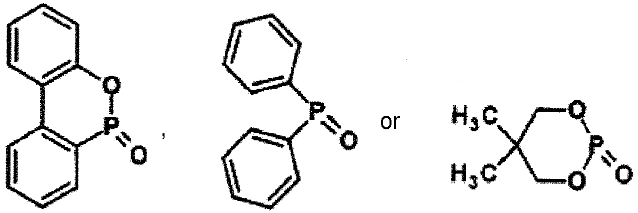
R³ 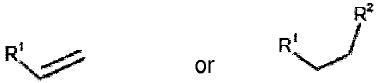
wherein within a compound of formula III and within the sub-unit A' the residues R³ can be the same or different and wherein the compound or the mixture of compounds of formula I is used in a ratio to the compound of formula II so that the ratio of 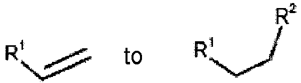 in the mixture produced in the first step of compounds III is in the range of between 4:1 and 1:4, and wherein
X 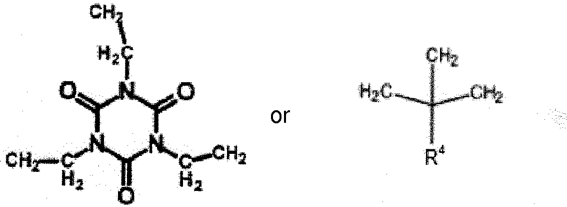 wherein R⁴ is hydrogen, CH₂OH, OH, a C₁-C₆ alkyl, a C₆-C₁₂ aryl, a C₆-C₁₂ alkylaryl or 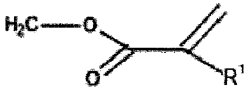 Z 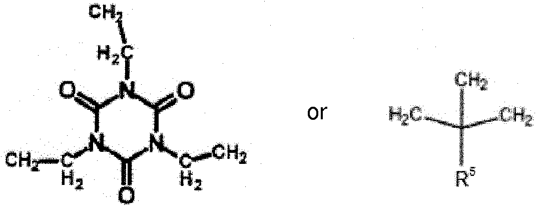 wherein R⁵ is hydrogen, CH₂OH, OH, a C₁-C₆ alkyl, a C₆-C₁₂ aryl, a C₆-C₁₂ alkylaryl or 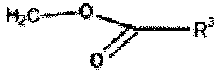 and
n in the compound according to formula I or the mixtures of compounds according to formulae I and III represents a mean chain length in the range of between 1 and 100.

9. A flame retardant composition containing a thermoset as set forth in one of claims 1 through 7.

10. A flame retardant composition as set forth in claim 9 which contains at least one further flame-retardant component selected from nitrogen bases, melamine derivatives, phosphates, pyrophosphates, polyphosphates, organic and inorganic phosphinates, organic and inorganic phosphonates and derivatives of the afore-mentioned compounds, preferably selected from ammonium polyphosphate, ammonium polyphosphate particles coated and/or coated and cross-linked with melamine, melamine resin, melamine derivatives, silanes, siloxanes or polystyrenes, as well as 1,3,5-triazine compounds including melamine, melam, melem, melon, ammeline, ammelide, 2-ureidomelamine, acetoguanamine, benzoguanamine, diamino phenyl triazine, melamine salts and adducts, melamine cyanurate, melamine borate, melamine orthophosphate, melamine pyrophosphate, dimelamine pyrophosphate and melamine polyphosphate, oligomeric and polymeric 1,3,5-triazine compounds and polyphosphates of 1,3,5-triazine compounds, guanine, piperazine phosphate, piperazine polyphosphate, ethylene diamine phosphate, pentaerythritol, borophosphate, 1,3,5-trihydroxyethyl isocyanurate, 1,3,5-triglycidyl isocyanurate, triallyl isocyanurate and derivatives of the afore-mentioned compounds.

11. A flame retardant composition as set forth in claim 10 **characterised in that** the ratio of thermoset to the at least one further flame retardant component in the flame retardant composition is between 1:99 and 99:1, preferably between 1:99 and 1:1 and particularly preferably between 1:99 and 1:9.

12. Use of a thermoset as set forth in one of claims 1 through 7 as a flame retardant or in a flame retardant composition as set forth in one of claims 9 through 11 in the production of plastic compositions.

13. Use as set forth in claim 12 **characterised in that** the plastic compositions are selected from filled and unfilled polyamides, polyesters and polyolefins.

14. Use as set forth in one of claims 12 or 13 **characterised in that** the thermoset is introduced in an amount of between 1 and 30% by weight, preferably between 1 and 15% by weight, with respect to the total weight of the plastic composition with thermoset.

15. Use as set forth in one of claims 12 through 14 **characterised in that** a flame retardant composition as set forth in one of claims 9 through 11 is introduced into the plastic composition, wherein preferably the flame retardant composition is contained in the plastic composition in an amount of between 5 and 60% by weight, particularly preferably between 10 and 50% by weight, with respect to the total weight of the plastic composition with flame retardant composition.

16. A plastic composition containing the thermoset as set forth in one of claims 1 through 7.

## Revendications

1. Plastique thermodurcissable, ou duromère, pouvant être obtenu par un procédé dans lequel on fait réagir, dans une première étape, un composé ou un mélange de composés ayant la formule générale I 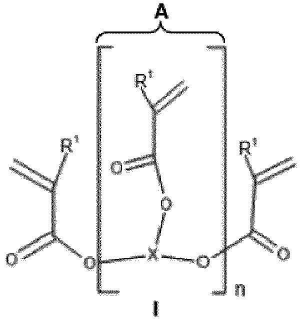 avec un composé de formule générale II
R²-H II
avec obtention d'un mélange de composés de formule générale III 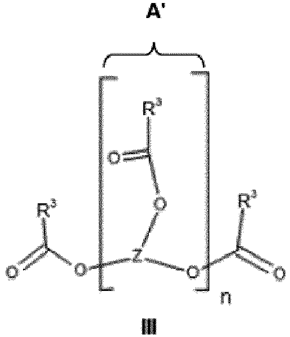 qui, est converti, dans une deuxième étape, dans le cadre d'une polymérisation radicalaire, en un plastique thermodurcissable, où R¹ est un atome d'hydrogène, un groupe alkyle en C₁-C₆, aryle en C₆-C₁₂ ou alkylaryle en C₆-C₁₂,
R² est 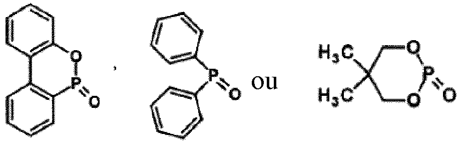
R³ est 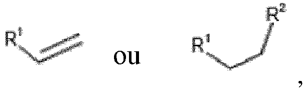
où, au sein d'un composé de formule III et au sein de la sous-unité A', les radicaux R³ peuvent être identiques ou différents, et où le composé ou le mélange de composés de formule I est utilisé selon un rapport avec le composé de formule II tel que le rapport de 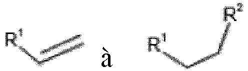 soit dans le mélange obtenu dans la première étape de composés III compris dans la plage de 4:1 à 1:4, et où
X est 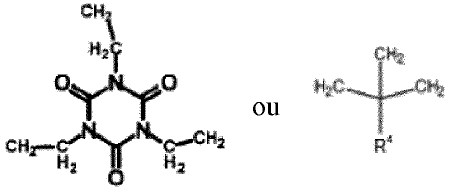 où R⁴ est un atome d'hydrogène, CH₂OH, OH, un groupe alkyle en C₁-C₆, aryle en C₆-C₁₂, alkylaryle en C₆-C₁₂ ou 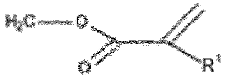 Z est 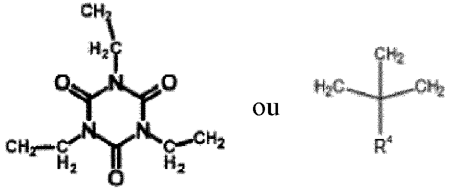 où R⁵ est un atome d'hydrogène, CH₂OH, OH, un groupe alkyle en C₁-C₆, aryle en C₆-C₁₂, alkylaryle en C₆-C₁₂ ou 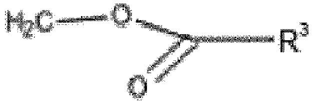 et
n, dans le composé de formule I ou dans les mélanges de composés de formules I et III, représente une longueur moyenne de chaîne comprise dans la plage de 1 à 100.

2. Plastique thermodurcissable selon la revendication 1, **caractérisé en ce que** le rapport en moles du composé de formule générale II au composé ou au mélange de composés de formule générale I est, avant la réaction dans la première étape, compris dans la plage de 1:5/E à 1:1,25/E, où E indique le nombre de groupes 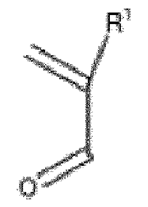 dans le composé ou dans le mélange de composés de formule I.

3. Plastique thermodurcissable selon l'une des revendications précédentes, **caractérisé en ce que** n est compris dans la plage de 1 à 50.

4. Plastique thermodurcissable selon l'une des revendications précédentes, **caractérisé en ce que** le composé I est choisi parmi le tétraacrylate de pentaérythritol, le pentaacrylate de dipentaérythritol, l'hexaacrylate de dipentaérythritol, le trisacrylate de triméthylolpropane et l'isocyanurate de tris(2-acryloxyéthyle).

5. Plastique thermodurcissable selon l'une des revendications précédentes, **caractérisé en ce que** la réaction, dans la première étape, a lieu par catalyse avec un catalyseur qui est choisi parmi les amines tertiaires et les bases aminées tertiaires, et est de préférence la triéthylamine.

6. Plastique thermodurcissable selon l'une des revendications précédentes, **caractérisé en ce que** la réaction dans la deuxième étape a lieu en émulsion dans le toluène ou dans l'eau.

7. Plastique thermodurcissable selon l'une des revendications précédentes, **caractérisé en ce que** la réaction dans la deuxième étape est mise en oeuvre à l'aide d'un amorceur radicalaire qui de préférence est choisi parmi l'azobis(isobutyronitrile) et le peroxyde de dibenzoyle.

8. Procédé dans lequel, dans une première étape, on fait réagir un composé ou un mélange de composés ayant la formule générale I 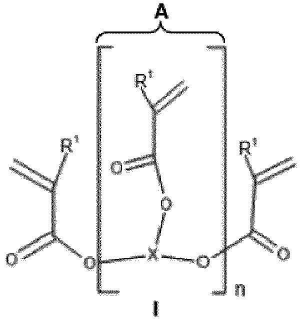 avec un composé de formule générale II
R²-H II
avec obtention d'un mélange de composés de formule générale III 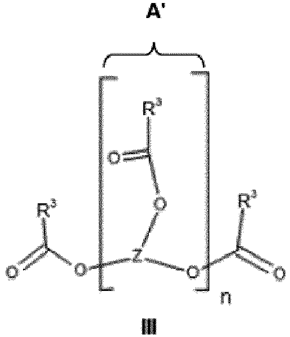 qui, dans une deuxième étape, est converti dans le cadre d'une polymérisation radicalaire en un plastique thermodurcissable, où
R¹ est un atome d'hydrogène, un groupe alkyle en C₁-C₆, aryle en C₆-C₁₂ ou alkylaryle en C₆-C₁₂,
R² est 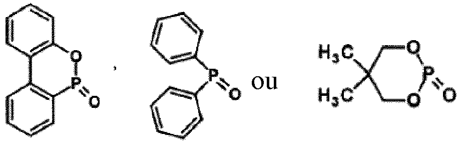
R³ est 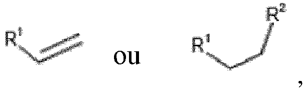
où, à l'intérieur d'un composé de formule III et à l'intérieur de la sous-unité A', les radicaux R³ peuvent être identiques ou différents, et où le composé ou le mélange de composés de formule I est utilisé selon un rapport avec le composé de formule II tel que le rapport de 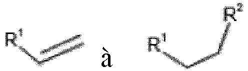 soit dans le mélange obtenu dans la première étape de composés III compris dans la plage de 4:1 à 1:4, et où
X est 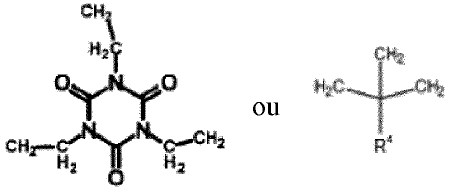 où R⁴ est un atome d'hydrogène, CH₂OH, OH, un groupe alkyle en C₁-C₆, aryle en C₆-C₁₂, alkylaryle en C₆-C₁₂ ou 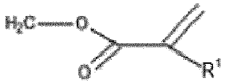 Z est 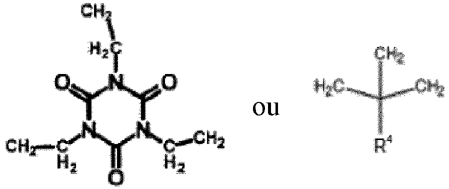 où R⁵ est un atome d'hydrogène, CH₂OH, OH, un groupe alkyle en C₁-C₆, aryle en C₆-C₁₂, alkylaryle en C₆-C₁₂ ou 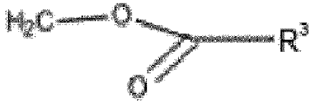 et
n, dans le composé de formule I ou dans les mélanges de composés de formules I et III, représente une longueur moyenne de chaîne comprise dans la plage de 1 à 100.

9. Composition retardatrice de flamme, qui contient un plastique thermodurcissable selon l'une des revendications 1 à 7.

10. Composition retardatrice de flamme selon la revendication 9, qui contient au moins un composant retardateur de flamme supplémentaire, choisi parmi les bases azotées, les dérivés de la mélamine, les phosphates, les pyrophosphates, les polyphosphates, les phosphinates organiques et inorganiques, les phosphonates organiques et inorganiques et les dérivés des composés mentionnés ci-avant, de préférence choisi parmi le polyphosphate d'ammonium, les particules de polyphosphate d'ammonium revêtues, et/ou revêtues et réticulées par de la mélamine, une résine de mélamine, des dérivés de mélamine, des silanes, des siloxanes ou des polystyrènes, ainsi que les composés de 1,3,5-triazine, y compris la mélamine, le mélam, le mélem, le mélon, l'améline, l'amélide, la 2-uréidomélamine, facétoguanamine, la benzoguanamine, la diaminophényltriazine, les sels et produits d'addition de mélamine, le cyanurate de mélamine, le borate de mélamine, l'orthophosphate de mélamine, le pyrophosphate de mélamine, le pyrophosphate de dimélamine et le polyphosphate de mélamine, les composés de 1,3,5-triazine oligomères et polymères, et les polyphosphates de composés de 1,3,5-triazine, la guanine, le phosphate de pipérazine, le polyphosphate de pipérazine, le phosphate d'éthylènediamine, le pentaérythritol, le phosphate de bore, l'isocyanurate de 1,3,5-trihydroxyéthyle, l'isocyanurate de 1,3,5-triglycidyle, l'isocyanurate de triallyle et les dérivés des composés mentionnés ci-avant.

11. Composition retardatrice de flamme selon la revendication 10, **caractérisée en ce que** le rapport du plastique thermodurcissable au ou aux composants retardateurs de flamme supplémentaires est, dans la composition retardatrice de flamme, de 1:99 à 99:1, de préférence de 1:99 à 1:1 et d'une manière particulièrement préférée de 1:99 à 1:9.

12. Utilisation d'un plastique thermodurcissable selon l'une des revendications 1 à 7 en tant que retardateur de flamme ou dans une composition retardatrice de flamme selon l'une des revendications 9 à 11 pour la fabrication de compositions de matériaux plastiques.

13. Utilisation selon la revendication 12, **caractérisée en ce que** les compositions de matériaux plastiques sont choisies parmi les polyamides, les polyesters et les polyoléfines chargés et non chargés.

14. Utilisation selon l'une des revendications 12 ou 13, **caractérisée en ce que** le plastique thermodurcissable est introduit en une quantité de 1 à 30 % en poids, de préférence comprise entre 1 et 15 % en poids par rapport au poids total de la composition de matériaux plastiques comprenant le plastique thermodurcissable.

15. Utilisation selon l'une des revendications 12 à 14, **caractérisée en ce qu'**on introduit dans la composition de matériaux plastiques une composition retardatrice de flamme selon l'une des revendications 9 à 11, la composition retardatrice de flamme étant de préférence présente dans la composition de matériaux plastiques en une quantité de 5 à 60 % en poids, d'une manière particulièrement préférée de 10 à 50 % en poids par rapport au poids total de la composition de matériaux plastiques comportant la composition retardatrice de flamme.

16. Composition de matériaux plastiques qui contient le plastique thermodurcissable selon l'une des revendications 1 à 7.
